(19) Europäisches Patentamt
European Patent Office
Office européen des brevets

(11) EP 3 878 905 B1

(12) **EUROPEAN PATENT SPECIFICATION**

(45) Date of publication and mention of the grant of the patent:
**10.07.2024 Bulletin 2024/28**

(21) Application number: **21160212.3**

(22) Date of filing: **02.03.2021**

(51) International Patent Classification (IPC):
***C08L 9/06** (2006.01)* ***B60C 1/00** (2006.01)*
***C08L 7/00** (2006.01)* ***C08K 3/36** (2006.01)*
***C08K 3/04** (2006.01)* ***C08K 5/548** (2006.01)*
***C08L 25/16** (2006.01)*

(52) Cooperative Patent Classification (CPC):
(C-Sets available)
**B60C 1/0016; C08L 7/00; C08L 9/06** (Cont.)

(54) **TIRE TREAD RUBBER COMPOSITION , TIRE TREAD, AND TIRE FOR PASSENGER CAR**

REIFENLAUFFLÄCHENZUSAMMENSETZUNG, REIFENLAUFFLÄCHE UND REIFEN FÜR PERSONENKRAFTWAGEN

COMPOSITION DE CAOUTCHOUC POUR BANDE DE ROULEMENT DE PNEU, BANDE DE ROULEMENT DE PNEU ET PNEU POUR VOITURE DE TOURISME

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.03.2020 JP 2020041240**

(43) Date of publication of application:
**15.09.2021 Bulletin 2021/37**

(73) Proprietor: **Sumitomo Rubber Industries, Ltd.**
**Kobe-shi, Hyogo-ken 651-0072 (JP)**

(72) Inventor: **OSHIMO, Masaki**
**Kobe-shi, Hyogo 651-0072 (JP)**

(74) Representative: **Manitz Finsterwald**
**Patent- und Rechtsanwaltspartnerschaft mbB**
**Martin-Greif-Strasse 1**
**80336 München (DE)**

(56) References cited:
**EP-A1- 3 450 206**
**EP-A1- 3 882 045**
**EP-A1- 3 882 046**
**CA-A1- 3 074 175**
**JP-A- 2016 094 552**

EP 3 878 905 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets

**C08L 7/00, C08L 9/06, C08L 9/00, C08L 9/06, C08L 25/16, C08L 91/06, C08L 45/00, C08K 5/18, C08K 5/31, C08K 5/47, C08K 5/09, C08K 3/06, C08K 3/22;**
**C08L 9/06, C08L 7/00, C08L 9/00, C08L 9/00, C08L 25/16, C08L 91/06, C08L 45/00, C08K 5/18, C08K 5/31, C08K 5/47, C08K 5/09, C08K 3/06, C08K 3/22;**
**C08L 9/06, C08L 7/00, C08L 9/00, C08L 9/06, C08L 25/16, C08L 91/06, C08L 45/00, C08K 5/18, C08K 5/31, C08K 5/47, C08K 5/09, C08K 3/06, C08K 3/22;**
**C08L 9/06, C08L 7/00, C08L 9/00, C08L 9/06, C08L 91/00, C08L 25/16, C08L 91/06, C08L 45/00, C08K 5/18, C08K 5/31, C08K 5/47, C08K 5/09, C08K 3/06, C08K 3/22;**
**C08L 9/06, C08L 9/00, C08L 7/00, C08L 9/06, C08L 91/00, C08L 25/16, C08L 91/06, C08L 45/00, C08K 5/18, C08K 5/31, C08K 5/47, C08K 5/09, C08K 3/06, C08K 3/22;**
**C08L 9/06, C08L 9/00, C08L 7/00, C08L 25/16, C08L 9/06, C08L 91/06, C08L 45/00, C08K 5/18, C08K 5/31, C08K 5/47, C08K 5/09, C08K 3/06, C08K 3/22**

## Description

BACKGROUND OF THE INVENTION

Field of the Invention

The present invention relates to a tire tread rubber composition, a tire tread formed from the rubber composition, and a tire for a passenger car that includes the tire tread.

Description of the Background Art

Conventionally, tires have been required to have various kinds of performance such as low fuel consumption performance, wet grip performance, and fracture properties.

For example, Japanese Laid-Open Patent Publication No. 2011-246561 discloses a tire tread rubber composition in which a filler including a predetermined amount of silica is blended into a diene-based rubber component including, at a predetermined weight ratio, three rubbers including a predetermined emulsion-polymerized styrene-butadiene rubber, a terminalmodified solution-polymerized styrene-butadiene rubber, and a natural rubber in order to achieve low rolling resistance and improve wet grip performance and wear resistance.
Further prior art rubber compositions and tires comprising these rubber compositions are disclosed in the following documents EP 3 882 045 A1 and EP 3 882 046 A1 which are prior art under Art. 54(3) EPC.

However, a rubber composition in which silica is blended into a styrene-butadiene rubber has a problem that processability deteriorates due to the adhesion between the styrene-butadiene rubber and the silica by chemical bond.

An object of the present invention is to provide a tire tread rubber composition that can have improved low fuel consumption performance, wet grip performance, fracture properties, and processability in a well-balanced manner as a whole, a tire tread formed from the rubber composition, and a tire for a passenger car that includes the tire tread.

SUMMARY OF THE INVENTION

The present inventor has conducted an intensive study in order to solve the above problem, and, as a result, has found that the problem can be solved by blending a filler including a predetermined amount of silica and a predetermined amount of carbon black, a mercapto-based silane coupling agent, a liquid rubber, and a resin into a rubber component including an isoprene-based rubber and a styrene-butadiene rubber to prepare a rubber composition. The present inventor has conducted a further study and has completed the present invention.

Specifically, the present invention is directed to the following:

[1] A tire tread rubber composition containing:

a rubber component including an isoprene-based rubber and a styrene-butadiene rubber;
a filler including 20% by mass or more of silica and 20% by mass or more of carbon black;
a mercapto-based silane coupling agent;
a liquid rubber; and
a resin,

wherein the mercapto-based silane coupling agent means a silane coupling agent having a mercapto group and a silane coupling agent having a structure in which a mercapto group is protected by a protecting group.
Preferably, a filler includes 20% by mass or more, preferably 21% by mass or more, more preferably 23% by mass or more, more preferably 25% by mass or more, or preferably 20 to 80% by mass, more preferably 21 to 80% by mass, more preferably 21 to 70% by mass, more preferably 23 to 70% by mass, more preferably 23 to 65% by mass, and more preferably 25 to 65% by mass of silica, and 20% by mass or more, preferably 25% by mass or more, more preferably 30% by mass or more, and more preferably 35% by mass or more, or preferably 20 to 80% by mass, more preferably 25 to 80% by mass, more preferably 25 to 77% by mass, more preferably 30 to 77% by mass, more preferably 30 to 75% by mass, and more preferably 35 to 75% by mass of carbon black.

[2] The tire tread rubber composition according to the above [1], wherein an amount (% by mass) of the isoprene-based rubber in the rubber component and an amount (parts by mass) of the silica per 100 parts by mass of the rubber component satisfy the following formula (A),

$$\text{(amount of isoprene-based rubber) / (amount of silica)} \leq 2.0 \qquad \text{(A)}.$$

(preferably (amount of isoprene-based rubber) / (amount of silica) ≤ 1.5, more preferably (amount of isoprene-based rubber) / (amount of silica) ≤ 1.0, more preferably (amount of isoprene-based rubber) / (amount of silica) ≤ 0.8, more preferably (amount of isoprene-based rubber) / (amount of silica) ≤ 0.6, or preferably 0.1 ≤ (amount of isoprene-based rubber) / (amount of silica) ≤ 2.0, more preferably, 0.1 ≤ (amount of isoprene-based rubber) / (amount of silica) ≤ 1.5, more preferably 0.1 ≤ (amount of isoprene-based rubber) / (amount of silica) ≤ 1.0, more preferably 0.2 ≤ (amount of isoprene-based rubber) / (amount of silica) ≤ 0.8, more preferably 0.2 ≤ (amount of isoprene-based rubber) / (amount of silica) ≤ 0.6)

[3] The tire tread rubber composition according to the above [1] or [2], wherein the liquid rubber is a liquid styrene-butadiene rubber.

[4] The tire tread rubber composition according to any one of the above [1] to [3], wherein the resin is an aromatic resin.

[5] The tire tread rubber composition according to any one of the above [1] to [4], wherein an amount (parts by mass) of the liquid rubber and the amount (parts by mass) of the silica per 100 parts by mass of the rubber component satisfy the following formula (B),

$$\text{(amount of liquid rubber)} / \text{(amount of silica)} \geq 0.1 \qquad \text{(B)}.$$

(preferably (amount of liquid rubber) / (amount of silica) ≥ 0.2, more preferably (amount of liquid rubber) / (amount of silica) ≥ 0.3, or preferably 1.0 ≥ (amount of liquid rubber) / (amount of silica) ≥ 0.1, more preferably 0.7 ≥ (amount of liquid rubber) / (amount of silica) ≥ 0.1, more preferably 0.5 ≥ (amount of liquid rubber) / (amount of silica) ≥ 0.2, more preferably 0.5 ≥ (amount of liquid rubber) / (amount of silica) ≥ 0.3)

[6] The tire tread rubber composition according to any one of the above [1] to [5], wherein the amount (% by mass) of the isoprene-based rubber in the rubber component and an amount (parts by mass) of the resin per 100 parts by mass of the rubber component satisfy the following formula (C),

$$\text{(amount of isoprene-based rubber)} / \text{(amount of resin)} \leq 13.0 \qquad \text{(C)}.$$

(preferably (amount of isoprene-based rubber) / (amount of resin) ≤ 12.0, more preferably, (amount of isoprene-based rubber) / (amount of resin) ≤ 10.0, more preferably (amount of isoprene-based rubber) / (amount of resin) ≤ 8.0, or preferably 0.3 ≤ (amount of isoprene-based rubber) / (amount of resin) ≤ 13.0, more preferably 0.7 ≤ (amount of isoprene-based rubber) / (amount of resin) ≤ 12.0, more preferably 1.0 ≤ (amount of isoprene-based rubber) / (amount of resin) ≤ 10.0, more preferably 1.3 ≤ (amount of isoprene-based rubber) / (amount of resin) ≤ 10.0, more preferably 1.3 ≤ (amount of isoprene-based rubber) / (amount of resin) ≤ 8.0)

[7] The tire tread rubber composition according to any one of the above [1] to [6], wherein the amount (parts by mass) of the liquid rubber and the amount (parts by mass) of the resin per 100 parts by mass of the rubber component satisfy the following formula (D),

$$\text{(amount of liquid rubber)} + \text{(amount of resin)} \geq 11 \qquad \text{(D)}.$$

(preferably (amount of liquid rubber) + (amount of resin) ≥ 12, more preferably (amount of liquid rubber) + (amount of resin) ≥ 13, more preferably (amount of liquid rubber) + (amount of resin) ≥ 14, or preferably 35 ≥ (amount of liquid rubber) + (amount of resin) ≥ 11, more preferably 30 ≥ (amount of liquid rubber) + (amount of resin) ≥ 12, more preferably 25 ≥ (amount of liquid rubber) + (amount of resin) ≥ 13, more preferably 25 ≥ (amount of liquid rubber) + (amount of resin) ≥ 14, more preferably 22 ≥ (amount of liquid rubber) + (amount of resin) ≥ 14)

[8] The tire tread rubber composition according to any one of the above [1] to [7], wherein the amount of the isoprene-based rubber in the rubber component is less than 50% by mass, preferably not greater than 46% by mass, more preferably not greater than 43% by mass, and more preferably not greater than 40% by mass, or more preferably equal to or greater than 5% by mass and less than 50% by mass, more preferably 5 to 46% by mass, more preferably 5 to 43% by mass, more preferably 10 to 43% by mass, more preferably 10 to 40% by mass, and more preferably 15 to 40% by mass.

[9] The tire tread rubber composition according to any one of the above [1] to [8], wherein the mercapto-based silane coupling agent is at least one compound selected from the group consisting of a compound represented by the following formula (S 1), a compound represented by the following formula (1), and a compound containing a linking unit A represented by the following formula (2) and a linking unit B represented by the following formula (3), and is preferably the compound represented by the following formula (S 1),

[Chem. 1]

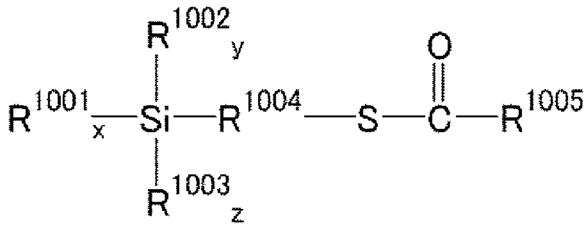

(S1)

wherein $R^{1001}$ represents a monovalent group selected from -Cl, -Br, $-OR^{1006}$, $-O(O=)CR^{1006}$, $-ON=CR^{1006}R^{1007}$, $-NR^{1006}R^{1007}$, and $-(OSiR^{1006}R^{1007})_h(OSiR^{1006}R^{1007}R^{1008})$ (wherein $R^{1006}$, $R^{1007}$, and $R^{1008}$ may be the same or may be different from each other and each represent a hydrogen atom or a monovalent hydrocarbon group having 1 to 18 carbon atoms, and an average of "h" is 1 to 4), $R^{1002}$ represents $R^{1001}$, a hydrogen atom, or a monovalent hydrocarbon group having 1 to 18 carbon atoms, $R^{1003}$ represents a $-[O(R^{1009}O)_j]-$ group ($R^{1009}$ is an alkylene group having 1 to 18 carbon atoms, and "j" is an integer from 1 to 4), $R^{1004}$ represents a divalent hydrocarbon group having 1 to 18 carbon atoms, $R^{1005}$ represents a monovalent hydrocarbon group having 1 to 18 carbon atoms, and "x", "y", and "z" are numerals that satisfy the relationships of $x + y + 2z = 3$, $0 \leq x \leq 3$, $0 \leq y \leq 2$, and $0 \leq z \leq 1$,

[Chem. 2]

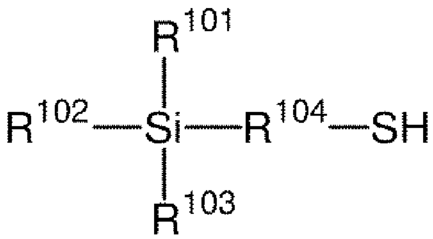

(1)

wherein $R^{101}$ to $R^{103}$ each represent a linear or branched alkyl group having 1 to 12 carbon atoms, a linear or branched alkoxy group having 1 to 12 carbon atoms, or a group represented by $-O-(R^{111}-O)_z-R^{112}$ (z $R^{111}$s each represent a linear or branched divalent hydrocarbon group having 1 to 30 carbon atoms, and may be the same or different from each other. $R^{112}$ represents a linear or branched alkyl group having 1 to 30 carbon atoms, a linear or branched alkenyl group having 2 to 30 carbon atoms, an aryl group having 6 to 30 carbon atoms, or an aralkyl group having 7 to 30 carbon atoms, "z" represents an integer from 1 to 30.), $R^{101}$ to $R^{103}$ may be the same or different from each other, and $R^{104}$ represents a linear or branched alkylene group having 1 to 6 carbon atoms,

[Chem. 3]

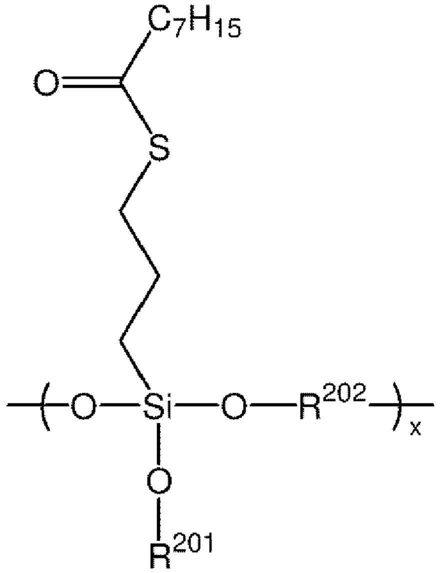

(2)

[Chem. 4]

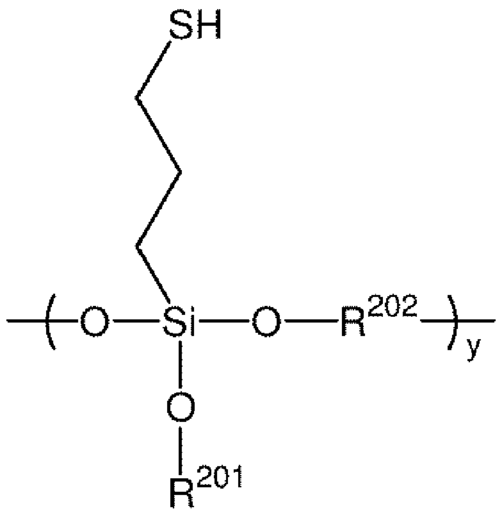

(3)

wherein "x" is an integer equal to or greater than 0, "y" is an integer equal to or greater than 1, each $R^{201}$ represents a hydrogen atom, a halogen atom, a linear or branched alkyl group having 1 to 30 carbon atoms, a linear or branched alkenyl group having 2 to 30 carbon atoms, a linear or branched alkynyl group having 2 to 30 carbon atoms, or a group obtained by substituting a hydrogen atom at the end of the alkyl group with a hydroxyl group or a carboxyl group, each $R^{202}$ represents a linear or branched alkylene group having 1 to 30 carbon atoms, a linear or branched alkenylene group having 2 to 30 carbon atoms, or a linear or branched alkynylene group having 2 to 30 carbon atoms, and $R^{201}$ and $R^{202}$ may form a ring structure.

[10] A tire tread formed from the tire tread rubber composition according to any one of the above [1] to [9].

[11] A tire for a passenger car, comprising the tire tread according to the above [10].

[12] The tire for a passenger car according to the above [11], wherein a relationship between a tire outer diameter Dt (mm) and a tire cross-section width Wt (mm) satisfies the following formula (α),

$$1963.4 \leq (Dt ^\wedge 2 \times \pi/4) / Wt \leq 2827.4 \qquad (\alpha).$$

(preferably $1970.0 \leq (Dt ^\wedge 2 \times \pi/4) / Wt \leq 2800.0$, more preferably $1980.0 \leq (Dt ^\wedge 2 \times \pi/4) / Wt \leq 2700.0$, more

preferably $1990.0 \leq (Dt ^ 2 \times \pi/4) / Wt \leq 2600.0$)

According to the present invention, it is possible to provide a tire tread rubber composition that can have improved low fuel consumption performance, wet grip performance, fracture properties, and processability in a well-balanced manner as a whole, a tire tread formed from the rubber composition, and a tire for a passenger car that includes the tire tread.

DESCRIPTION OF THE PREFERRED EMBODIMENTS

An embodiment of the present disclosure is directed to a tire tread rubber composition containing a rubber component including an isoprene-based rubber and a styrene-butadiene rubber, a filler including 20% by mass or more of silica and 20% by mass of carbon black, a mercapto-based silane coupling agent, a liquid rubber, and a resin, wherein the mercapto-based silane coupling agent means a silane coupling agent having a mercapto group and a silane coupling agent having a structure in which a mercapto group is protected by a protecting group.

Although not intended to be bound by a theory, the following can be considered as a mechanism by which the above effect is achieved. In the case where an isoprene-based rubber (IR-based) and a styrene-butadiene rubber (SBR) are included as a rubber component, an IR-based phase composed of the isoprene-based rubber and an SBR phase composed of the styrene-butadiene rubber form a sea-island structure, that is, an island phase composed of the IR-based phase and a sea phase composed of the SBR phase. Since these rubber components have different polarities from each other, when only either silica or carbon black is blended as a filler, uneven distribution of the filler in each phase occurs. That is, the silica tends to be distributed to the SBR phase, and the carbon black tends to be distributed to the IR-based phase. Therefore, both silica and carbon black are evenly blended as a filler to make dispersion of the filler uniform, thereby improving fracture properties. However, in this case, the energy loss in the high frequency range, which contributes to wet grip performance, in the SBR phase tends to be reduced, and thus a resin that interacts with silica is blended to increase the energy loss in the SBR phase, thereby improving wet grip performance. However, by doing so, the silica and the resin act to deteriorate the fluidity of the SBR phase, thereby decreasing processability. Thus, in order to improve the fluidity of the SBR phase, a liquid rubber that directly contributes to fluidity improvement is blended, thereby improving processability. In addition, if the dispersibility of the silica is enhanced by blending a mercapto-based silane coupling agent that is highly reactive with silica, this contributes to improvement of low fuel consumption performance and further improvement of wet grip performance. From the above, it is considered that low fuel consumption performance, wet grip performance, fracture properties, and processability are improved in a well-balanced manner as a whole.

The amount (% by mass) of the isoprene-based rubber in the rubber component and the amount of the silica (parts by mass) per 100 parts by mass of the rubber component preferably satisfy the following formula (A). This is because, when the mass ratio of the isoprene-based rubber to the silica is not greater than 2.0, uneven distribution of the filler to the IR-based phase and the SBR phase is less likely to occur, and the silica is easily distributed, so that low fuel consumption performance and fracture properties tend to be able to be further improved in a well-balanced manner. The value of (amount of isoprene-based rubber) / (amount of silica) is preferably not greater than 1.5, more preferably not greater than 1.0, more preferably not greater than 0.8, and further preferably not greater than 0.6. In addition, for the reason that the advantageous effects of the present disclosure are more suitably achieved, the value of (amount of isoprene-based rubber) / (amount of silica) is preferably not less than 0.1 and more preferably not less than 0.2.

$$\text{(Amount of isoprene-based rubber) / (amount of silica)} \leq 2.0 \qquad \text{(A)}$$

The liquid rubber is preferably a liquid styrene-butadiene rubber. This is because the liquid styrene-butadiene rubber selectively enters the SBR phase, whereby the fluidity of the SBR phase tends to be able to be improved to more favorably achieve the effect of improving processability.

The resin is preferably an aromatic resin. This is because, since the aromatic resin has excellent compatibility with SBR, the aromatic resin tends to be able to more favorably achieve the effect of improving wet grip performance, by interacting with the silica in the SBR phase to increase the energy loss in the high frequency range in the SBR phase.

The amount (parts by mass) of the liquid rubber and the amount (parts by mass) of the silica per 100 parts by mass of the rubber component preferably satisfy the following formula (B). This is because, when the mass ratio of the liquid rubber to the silica is not less than 0.1, the liquid rubber improves the fluidity of the SBR phase to enhance processability, and also allows the silica to be easily dispersed, which contributes to improvement of low fuel consumption performance, so that low fuel consumption performance and processability tend to be able to be further improved in a well-balanced manner. The value of (amount of liquid rubber) / (amount of silica) is preferably not less than 0.2 and more preferably not less than 0.3. In addition, for the reason that the advantageous effects of the present disclosure are more

suitably achieved, the value of (amount of liquid rubber) / (amount of silica) is preferably not greater than 1.0, more preferably not greater than 0.7, and further preferably not greater than 0.5.

$$\text{(Amount of liquid rubber) / (amount of silica)} \geq 0.1 \qquad \text{(B)}$$

The amount (% by mass) of the isoprene-based rubber in the rubber component and the amount (parts by mass) of the resin per 100 parts by mass of the rubber component preferably satisfy the following formula (C). This is because, when the mass ratio of the isoprene-based rubber to the resin is not greater than 13.0, the effect by blending the resin is easily achieved to increase the energy loss in the high frequency range in the SBR phase, and the effect of improving fracture properties by the isoprene-based rubber itself is easily achieved, so that wet grip performance and fracture properties tend to be able to be further improved in a well-balanced manner. The value of (amount of isoprene-based rubber) / (amount of resin) is preferably not greater than 12.0, more preferably not greater than 10.0, and further preferably not greater than 8.0. In addition, for the reason that the advantageous effects of the present disclosure are more suitably achieved, the value of (amount of isoprene-based rubber) / (amount of resin) is preferably not less than 0.3, more preferably not less than 0.7, more preferably not less than 1.0, and further preferably not less than 1.3.

$$\text{(Amount of isoprene-based rubber) / (amount of resin)} \leq 13.0 \qquad \text{(C)}$$

The amount (parts by mass) of the liquid rubber and the amount (parts by mass) of the resin per 100 parts by mass of the rubber component preferably satisfy the following formula (D). This is because, when the sum of the amounts of the liquid rubber and the resin is not less than 11, the effect by blending both the resin and the liquid rubber is easily achieved, and the fluidity of the SBR phase is improved while the energy loss in the high frequency range in the SBR phase is increased, so that wet grip performance and processability tend to be able to be further improved in a well-balanced manner. The value of (amount of liquid rubber) + (amount of resin) is preferably not less than 12, more preferably not less than 13, and further preferably not less than 14. In addition, for the reason that the advantageous effects of the present disclosure are more suitably achieved, the value of (amount of liquid rubber) + (amount of resin) is preferably not greater than 35, more preferably not greater than 30, more preferably not greater than 25, and further preferably not greater than 22.

$$\text{(Amount of liquid rubber) + (amount of resin)} \geq 11 \qquad \text{(D)}$$

The amount of the isoprene-based rubber in the rubber component is preferably less than 50% by mass. This is because, when the amount is less than 50% by mass, an IR-based phase is easily formed as an island phase, so that the effect of improving wet grip performance by the SBR phase tends to be easily achieved. From the viewpoint of improvement of processability, the amount is preferably not greater than 46% by mass, more preferably not greater than 43% by mass, and further preferably not greater than 40% by mass. In addition, from the viewpoint of improvement of fracture properties, the amount is preferably not less than 5% by mass, more preferably not less than 10% by mass, and further preferably not less than 15% by mass.

The mercapto-based silane coupling agent is preferably at least one compound selected from the group consisting of a compound represented by the following formula (S 1), a compound represented by the following formula (1), and a compound containing a linking unit A represented by the following formula (2) and a linking unit B represented by the following formula (3). This is because, since these compounds are highly reactive with silica, the effect of improving silica dispersion is favorably achieved, so that the advantageous effects of the present disclosure can be more favorably achieved.

[Chem. 5]

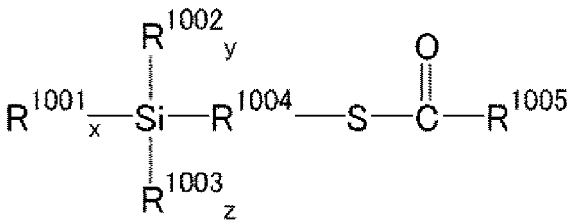

(S1)

wherein $R^{1001}$ represents a monovalent group selected from -Cl, -Br, $-OR^{1006}$, $-O(O=)CR^{1006}$, - $ON=CR^{1006}R^{1007}$, $-NR^{1006}R^{1007}$, and $-(OSiR^{1006}R^{1007})_h(OSiR^{1006}R^{1007}R^{1008})$ (wherein $R^{1006}$, $R^{1007}$, and $R^{1008}$ may be the same or may be different from each other and each represent a hydrogen atom or a monovalent hydrocarbon group having 1 to 18 carbon atoms, and an average of "h" is 1 to 4), $R^{1002}$ represents $R^{1001}$, a hydrogen atom, or a monovalent hydrocarbon group having 1 to 18 carbon atoms, $R^{1003}$ represents a $-[O(R^{1009}O)_j]-$ group ($R^{1009}$ is an alkylene group having 1 to 18 carbon atoms, and "j" is an integer from 1 to 4), $R^{1004}$ represents a divalent hydrocarbon group having 1 to 18 carbon atoms, $R^{1005}$ represents a monovalent hydrocarbon group having 1 to 18 carbon atoms, and "x", "y", and "z" are numerals that satisfy the relationships of $x + y + 2z = 3$, $0 \leq x \leq 3$, $0 \leq y \leq 2$, and $0 \leq z \leq 1$.

[Chem. 6]

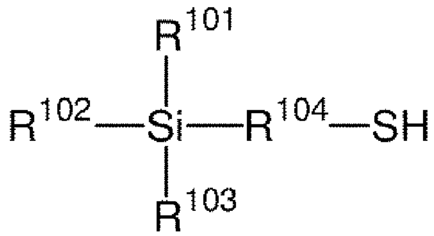

(1)

wherein $R^{101}$ to $R^{103}$ each represent a linear or branched alkyl group having 1 to 12 carbon atoms, a linear or branched alkoxy group having 1 to 12 carbon atoms, or a group represented by $-O-(R^{111}-O)_z-R^{112}$ (z $R^{111}$s each represent a linear or branched divalent hydrocarbon group having 1 to 30 carbon atoms, and may be the same or different from each other. $R^{112}$ represents a linear or branched alkyl group having 1 to 30 carbon atoms, a linear or branched alkenyl group having 2 to 30 carbon atoms, an aryl group having 6 to 30 carbon atoms, or an aralkyl group having 7 to 30 carbon atoms, "z" represents an integer from 1 to 30.), $R^{101}$ to $R^{103}$ may be the same or different from each other, and $R^{104}$ represents a linear or branched alkylene group having 1 to 6 carbon atoms.

[Chem. 7]

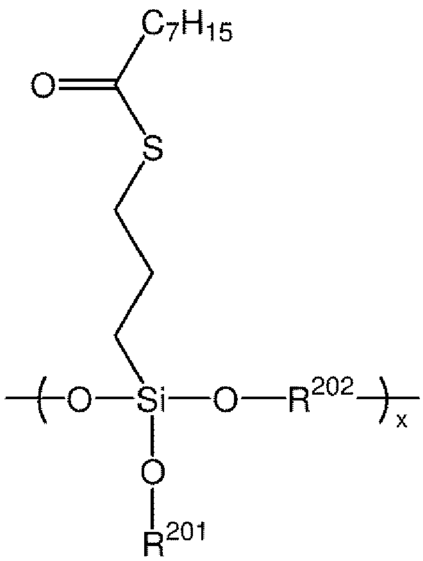

(2)

[Chem. 8]

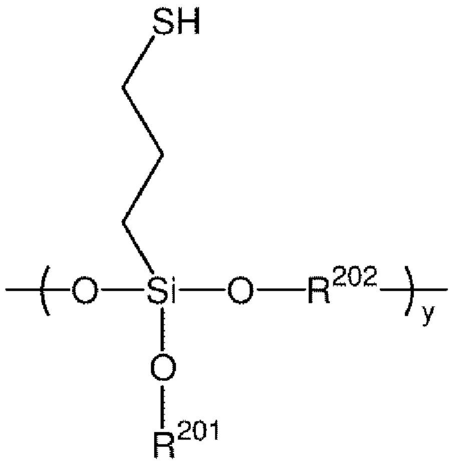

(3)

wherein "x" is an integer equal to or greater than 0, "y" is an integer equal to or greater than 1, each $R^{201}$ represents a hydrogen atom, a halogen atom, a linear or branched alkyl group having 1 to 30 carbon atoms, a linear or branched alkenyl group having 2 to 30 carbon atoms, a linear or branched alkynyl group having 2 to 30 carbon atoms, or a group obtained by substituting a hydrogen atom at the end of the alkyl group with a hydroxyl group or a carboxyl group, each $R^{202}$ represents a linear or branched alkylene group having 1 to 30 carbon atoms, a linear or branched alkenylene group having 2 to 30 carbon atoms, or a linear or branched alkynylene group having 2 to 30 carbon atoms, and $R^{201}$ and $R^{202}$ may form a ring structure.

Another embodiment of the present disclosure is directed to a tire tread formed from the tire tread rubber composition.

Still another embodiment of the present disclosure is directed to a tire for a passenger car that includes the tire tread.

The tire for a passenger car is preferably applied to a tire for a passenger car in which a relationship between a tire outer diameter Dt (mm) and a tire cross-section width Wt (mm) satisfies the following formula ($\alpha$).

$$1963.4 \leq (Dt \wedge 2 \times \pi/4) / Wt \leq 2827.4 \qquad (\alpha)$$

In the present description, when a numerical range is indicated by using "to", the numerical values at both ends thereof are included unless otherwise specified.

<Rubber Component>

The rubber component of the present disclosure includes an isoprene-based rubber and a styrene-butadiene rubber.

(Isoprene-Based Rubber)

Examples of the isoprene-based rubber include natural rubber (NR), reformed NR, modified NR, isoprene rubber (IR), and modified IR. As the NR, NRs that are generally used in the tire industry, such as SIR20, RSS#3, and TSR20, can be used. Examples of the reformed NR include deproteinized natural rubber (DPNR) and ultra-pure natural rubber, and examples of the modified NR include epoxidized natural rubber (ENR), hydrogenated natural rubber (HNR), and grafted natural rubber. The IR is not particularly limited, and IRs that are generally used in the tire industry can be used. Examples of the modified IR include epoxidized isoprene rubber, hydrogenated isoprene rubber, and grafted isoprene rubber. Among them, from the viewpoint of improvement of fracture properties, at least one rubber selected from among the NR, the reformed NR, and the modified NR is preferably included. Among them, for the reason that the NR has the property of elongation crystallization and is particularly excellent in tensile strength and thus can further improve fracture properties, the NR is more preferably included as the isoprene-based rubber, and the isoprene-based rubber may be only the NR. One of these isoprene-based rubbers may be used alone, or two or more of these isoprene-based rubbers may be used in combination.

(Styrene-Butadiene Rubber)

The styrene-butadiene rubber (SBR) is not particularly limited, and examples of the styrene-butadiene rubber include an unmodified emulsion-polymerized styrene-butadiene rubber (E-SBR), an unmodified solution-polymerized styrene-butadiene rubber (S-SBR), and modified SBRs such as modified emulsion-polymerized styrene-butadiene rubbers (modified E-SBR) and a modified solution-polymerized styrene-butadiene rubber (modified S-SBR) obtained by modifying these styrene-butadiene rubbers. Examples of modified SBRs include modified SBRs in which the terminals and/or the main chain thereof is modified, and modified SBRs coupled by using tin, a silicon compound, or the like (a condensate, one having a branch structure, etc.). In addition, SBRs include an oil-extended type having flexibility adjusted by adding extender oil, and a non-oil-extended type in which no extender oil is added, and any of these types can be used. As the SBR, for example, SBRs manufactured by and available from JSR Corporation, Asahi Kasei Chemicals Corporation, Zeon Corporation, ZS Elastomers Co., Ltd., etc., can be used. Among them, for the reason that low fuel consumption performance, wet grip performance, and processability can be further improved in a well-balanced manner, at least one of an E-SBR and an S-SBR is preferably included, an E-SBR is more preferably included, and the SBR is further preferably only an E-SBR. One of these SBRs may be used alone, or two or more of these SBRs may be used in combination.

The styrene content of the SBR is not particularly limited, but is preferably 15.0% by mass to 40.0% by mass. From the viewpoint of rubber strength and grip performance, the styrene content is more preferably not less than 20.0% by mass. In addition, from the viewpoint of low fuel consumption performance and wear resistance, the styrene content is more preferably not greater than 30.0% by mass. The styrene content in the present description is a value calculated by $^1$H-NMR measurement.

The vinyl content (1,2-bond butadiene unit content) of the SBR is not particularly limited, but is preferably 10.0 to 80.0%. From the viewpoint of rubber strength and grip performance, the vinyl content is preferably not less than 13.0% and more preferably not less than 15.0%. In addition, from the viewpoint of low fuel consumption performance, the vinyl content is preferably not greater than 60.0%, preferably not greater than 40.0%, and more preferably not greater than 20.0%. The vinyl content in the present description is a value measured by infrared absorption spectrometry.

The amount of the SBR in the rubber component is preferably not less than 5% by mass, more preferably not less than 10% by mass, more preferably not less than 20% by mass, more preferably not less than 25% by mass, more preferably not less than 30% by mass, more preferably not less than 40% by mass, more preferably not less than 50% by mass, more preferably not less than 55% by mass, and further preferably not less than 60% by mass. In addition, the amount is preferably not greater than 95% by mass, more preferably not greater than 80% by mass, and further preferably not greater than 65% by mass. When the amount of the SBR is within the above range, the effect of further improving low fuel consumption performance, wet grip performance, fracture properties, and processability in a well-balanced manner as a whole tends to be achieved. Here, for the reason that the advantageous effects of the present disclosure are more suitably achieved, the SBR is preferably included as a main component in the rubber component (a component included in the largest amount in the rubber component). In the case where an oil-extended type SBR is used as the SBR, the amount of the SBR itself as a solid component contained in the oil-extended type SBR is defined as the amount of the SBR in the rubber component.

(Other Rubber Components)

The rubber component may include a rubber component (another rubber component) other than the isoprene-based rubber and the styrene-butadiene rubber. Such another rubber component is not particularly limited, and any of rubbers that are conventionally used in the rubber industry, such as diene-based rubbers other than the isoprene-based rubber and the styrene-butadiene rubber and non-diene rubbers, is suitable for use. Examples of such diene-based rubbers include butadiene rubber (BR), styrene-isoprene rubber (SIR), styrene-isoprene-butadiene rubber (SIBR), chloroprene rubber (CR), and acrylonitrile-butadiene rubber (NBR). Examples of non-diene rubbers include isobutylene-isoprene-rubber (IIR), hydrogenated nitrile rubber (HNBR), ethylene-propylene rubber, silicone rubber, chlorinated polyethylene rubber, fluororubber (FKM), acrylic rubber (ACM), and hydrin rubber. As the other rubber component, one of these rubbers can be used alone, or two or more of these rubbers can be used in combination. Among them, for the reason that the advantageous effects of the present disclosure can be more favorably achieved, BR is preferable. That is, as the rubber component, an isoprene-based rubber, an SBR, and a BR are more preferably included, and the rubber component may include only an isoprene-based rubber, an SBR, and a BR.

The BR is not particularly limited, and any of BRs that are normally used in this field is suitable for use. For example, various BRs, such as a low-cis polybutadiene rubber (low-cis BR), a high-cis polybutadiene rubber (high-cis BR), a rare earth butadiene rubber synthesized using a rare earth element catalyst (rare earth BR), a BR containing 1,2-syndiotactic polybutadiene crystals (SPB-containing BR), and a modified butadiene rubber (modified BR), can be used. Among them, a high-cis BR is preferable. As the BR, for example, BRs manufactured by and available from Ube Industries,

Ltd., Zeon Corporation, JSR Corporation, LANXESS, etc., can be used. One of these BRs can be used alone, or two or more of these BRs can be used in combination.

High-cis BRs refer to butadiene rubbers having a cis content (cis-1,4 bond content) not less than 90%. Among them, a butadiene rubber having a cis-1,4 bond content not less than 95% is preferable, a butadiene rubber having a cis-1,4 bond content not less than 96% is more preferable, and a butadiene rubber having a cis-1,4 bond content not less than 97% is further preferable. When a high-cis BR is contained, low heat generation properties, tensile strength, elongation at break, and wear resistance can be improved. The cis content in the present description is a value measured by infrared absorption spectrometry.

As the rare earth BR, a rare earth BR that is synthesized using a rare earth element catalyst, that has a vinyl content (1,2-bond butadiene unit content) preferably not greater than 1.8%, more preferably not greater than 1.0%, and further preferably not greater than 0.8%, and that has a cis content (cis-1,4 bond content) preferably not less than 90%, more preferably not less than 95%, more preferably not less than 96%, and further preferably not less than 97%, is suitable for use. When the vinyl content and the cis content are within the above ranges, the effect that the obtained rubber composition has excellent elongation at break and wear resistance is achieved.

As the rare earth element catalyst used for the synthesis of the rare earth BR, known catalysts can be used, and examples of such a catalyst include a catalyst containing a lanthanum series rare earth element compound, an organoaluminium compound, an aluminoxane, or a halogen-containing compound and optionally containing a Lewis base.

An example of the SPB-containing BR is not a BR in which 1,2-syndiotactic polybutadiene crystals are merely dispersed, but a BR in which 1,2-syndiotactic polybutadiene crystals are dispersed in a state of being chemically bound to the BR. When the crystals are dispersed in a state of being chemically bound to the rubber component, a complex elastic modulus tends to be improved.

Examples of modified BRs include modified BRs in which the terminals and/or the main chain thereof is modified, modified BRs coupled by using tin, a silicon compound, or the like (a condensate, one having a branch structure, etc.), modified BRs in which the terminals and/or the main chain thereof is modified with a functional group that is interactive with silica, and, in particular, modified BRs each having at least one group selected from the group consisting of a silyl group, an amino group, an amide group, a hydroxyl group, and an epoxy group. When a modified BR is used, the effect of strengthening the interaction with the filler to provide excellent low fuel consumption performance can be achieved.

In the case of containing a BR, the amount of the BR in the rubber component is preferably not less than 5% by mass, more preferably not less than 15% by mass, and further preferably not less than 25% by mass. In addition, the amount is preferably not greater than 60% by mass, more preferably not greater than 50% by mass, and further preferably not greater than 45% by mass. When the amount of the BR is within the above range, the effect of further improving low fuel consumption performance, wet grip performance, fracture properties, and processability in a well-balanced manner as a whole tends to be achieved.

<Filler>

The filler of the present disclosure includes 20% by mass or more of silica and 20% by mass or more of carbon black. For the reason that the advantageous effects of the present disclosure can be more favorably achieved, the filler of the present disclosure preferably consists of silica and carbon black.

(Silica)

The silica is not particularly limited, but examples of the silica include silica prepared by a dry process (silicic anhydride) and silica prepared by a wet process (hydrous silicic acid). Between them, silica prepared by a wet process is preferable for the reason that it has a higher silanol group content on the surface thereof and has many reactive points that are reactive with a silane coupling agent. As the silica, for example, silicas manufactured by and available from Evonik Degussa GmbH, Solvay SA, Tosoh Silica Corporation, Tokuyama Corporation, etc., can be used. One of these silicas can be used alone, or two or more these silicas can be used in combination.

The nitrogen adsorption specific surface area ($N_2SA$) of the silica is not particularly limited, but, from the viewpoint of ensuring low fuel consumption performance and sufficient reinforcing properties, the $N_2SA$ is preferably not less than 80 $m^2/g$, more preferably not less than 90 $m^2/g$, more preferably not less than 100 $m^2/g$, and further preferably not less than 110 $m^2/g$. In addition, from the viewpoint of dispersibility of the silica and processability, the $N_2SA$ is preferably not greater than 500 $m^2/g$, more preferably not greater than 300 $m^2/g$, more preferably not greater than 170 $m^2/g$, and further preferably not greater than 150 $m^2/g$. When the $N_2SA$ of the silica is within the above range, the advantageous effects of the present disclosure tend to be able to be more favorably achieved. The $N_2SA$ of the silica in the present description is a value measured by the BET method according to ASTM D3037-81.

The cetyltrimethylammonium bromide (CTAB) adsorption specific surface area of the silica is preferably not

less than 80 $m^2/g$, more preferably not less than 90 $m^2/g$, and further preferably not less than 100 $m^2/g$. In addition, the CTAB adsorption specific surface area is preferably not greater than 300 $m^2/g$, more preferably not greater than 170 $m^2/g$, and further preferably not greater than 150 $m^2/g$. When the CTAB adsorption specific surface area of the silica is within the above range, the advantageous effects of the present disclosure tend to be able to be more favorably achieved. The CTAB adsorption specific surface area of the silica in the present description is a value measured according to ASTM D3765-92.

From the viewpoint of ensuring low fuel consumption performance, wet grip performance, and sufficient reinforcing properties, the amount of the silica per 100 parts by mass of the rubber component is preferably not less than 5 parts by mass, more preferably not less than 10 parts by mass, and further preferably not less than 20 parts by mass. In addition, from the viewpoint of dispersibility of the silica, processability, and wet grip performance, the amount is preferably not greater than 150 parts by mass, more preferably not greater than 100 parts by mass, and further preferably not greater than 60 parts by mass.

(Carbon Black)

The carbon black is not particularly limited, and carbon blacks that are generally used in the rubber industry, such as GPF, FEF, HAF, ISAF, and SAF, can be used. As the carbon black, carbon blacks manufactured by and available from Asahi Carbon Co., Ltd., Cabot Japan K.K., Tokai Carbon Co., Ltd., Mitsubishi Chemical Corporation, Lion Corporation, NSCC Carbon Co., Ltd., Columbia Carbon Co., etc., can be used. One of these carbon blacks can be used alone, or two or more of these carbon blacks can be used in combination.

The $N_2SA$ of the carbon black is not particularly limited, but, from the viewpoint that sufficient reinforcing properties are ensured and fracture properties can be further improved, the $N_2SA$ is preferably not less than 50 $m^2/g$, more preferably not less than 70 $m^2/g$, more preferably not less than 90 $m^2/g$, and further preferably not less than 111 $m^2/g$. In addition, from the viewpoint that dispersibility is excellent and heat generation is less likely to occur, the $N_2SA$ is preferably not greater than 500 $m^2/g$, more preferably not greater than 450 $m^2/g$, more preferably not greater than 300 $m^2/g$, more preferably not greater than 250 $m^2/g$, more preferably not greater than 200 $m^2/g$, more preferably not greater than 180 $m^2/g$, and further preferably not greater than 160 $m^2/g$. When the $N_2SA$ of the carbon black is within the above range, the advantageous effects of the present disclosure tend to be able to be more favorably achieved. The $N_2SA$ of the carbon black in the present description is a value measured according to JIS K 6217-2: 2001.

The dibutyl phthalate (DBP) absorption amount of the carbon black is not particularly limited, but, from the viewpoint of ensuring sufficient reinforcing properties and the viewpoint of achieving good low fuel consumption performance, wet grip performance, and wear resistance, the DBP absorption amount is preferably not less than 50 ml/100g, more preferably not less than 70 ml/100g, more preferably not less than 90 ml/100g, and further preferably not less than 115 ml/100g. In addition, from the viewpoint of low fuel consumption performance, the DBP absorption amount is preferably not greater than 220 ml/100g, more preferably not greater than 180 ml/100g, and further preferably not greater than 130 ml/100g. When the DBP absorption amount of the carbon black is within the above range, the advantageous effects of the present disclosure tend to be able to be more favorably achieved. The DBP absorption amount of the carbon black in the present description is a value measured according to JIS K 6217-4: 2008.

The amount of the carbon black per 100 parts by mass of the rubber component is preferably not less than 10 parts by mass, more preferably not less than 20 parts by mass, and further preferably not less than 30 parts by mass. In addition, the amount is preferably not greater than 150 parts by mass, more preferably not greater than 100 parts by mass, and further preferably not greater than 60 parts by mass. When the amount of the carbon black is within the above range, sufficient fracture properties, good dispersion to rubber, and good processability tend to be achieved, so that the advantageous effects of the present disclosure tend to be able to be more favorably achieved.

(Other Fillers)

As the filler, in addition to the silica and the carbon black, another filler may be further used, or does not have to be further used. Such a filler is not particularly limited, and. for example, any of fillers that are normally used in this field, such as aluminum hydroxide, alumina (aluminum oxide), calcium carbonate, talc, and clay, can be used. As the other filler, one of these fillers can be used alone, or two or more of these fillers can be used in combination.

(Amounts of Silica and Carbon Black in Filler)

Each of the amounts of the silica and the carbon black in the filler is not less than 20% by mass. When each of the amounts of the silica and the carbon black in the filler is outside the above range, uneven distribution of the filler to the IR-based phase and the SBR phase occurs, so that low fuel consumption performance, wet grip performance, fracture properties, and processability tend to be less likely to be improved in a well-balanced manner as a whole. The

amount of the silica in the filler can be adjusted as appropriate to be within the above range, but is preferably not less than 21% by mass, more preferably not less than 23% by mass, and further preferably not less than 25% by mass. In addition, the amount of the silica in the filler is preferably not greater than 80% by mass, more preferably not greater than 70% by mass, and further preferably not greater than 65% by mass. The amount of the carbon black in the filler can be adjusted as appropriate to be within the above range, but is preferably not less than 25% by mass, more preferably not less than 30% by mass, and further preferably not less than 35% by mass. In addition, the amount of the carbon black in the filler is preferably not greater than 80% by mass, more preferably not greater than 77% by mass, and further preferably not greater than 75% by mass. When the amounts of the silica and the carbon black in the filler are within the above ranges, both distribution of the carbon black to the IR-based phase and distribution of the silica to the SBR phase are likely to be effectively achieved, so that the effect of further improving low fuel consumption performance, wet grip performance, fracture properties, and processability in a well-balanced manner as a whole tends to be achieved.

(Total Amount of Filler)

From the viewpoint of sufficient reinforcing properties, the total amount of the filler per 100 parts by mass of the rubber component is preferably not less than 30 parts by mass, more preferably not less than 60 parts by mass, and further preferably not less than 80 parts by mass. In addition, from the viewpoint of wet grip performance, the total amount is preferably not greater than 250 parts by mass, more preferably not greater than 180 parts by mass, more preferably not greater than 150 parts by mass, and further preferably not greater than 120 parts by mass.

<Silane Coupling Agent>

The rubber composition according to the present disclosure contains a mercapto-based silane coupling agent.

(Mercapto-Based Silane Coupling Agent)

In the present disclosure, the "mercapto-based silane coupling agent" means a silane coupling agent having a mercapto group and a silane coupling agent having a structure in which a mercapto group is protected by a protecting group. The mercapto-based silane coupling agent is not particularly limited, and is, for example, at least one compound selected from the group consisting of a compound represented by the following formula (S 1), a compound represented by the following formula (1), and a compound containing a linking unit A represented by the following formula (2) and a linking unit B represented by the following formula (3). Among them, for the reason that the advantageous effects of the present disclosure can be more favorably achieved, at least one of the compound represented by the following formula (S 1) and the compound containing the linking unit A represented by the following formula (2) and the linking unit B represented by the following formula (3) is preferable, and the compound represented by the following formula (S 1) is more preferable.

[Chem. 9]

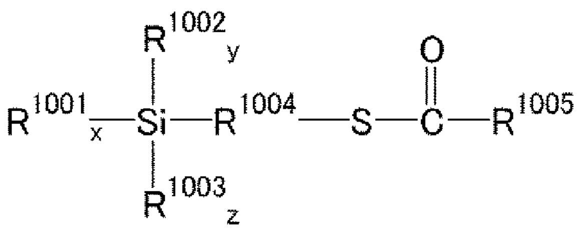

(S1)

wherein $R^{1001}$ represents a monovalent group selected from -Cl, -Br, -OR$^{1006}$, -O(O=)CR$^{1006}$, - ON=CR$^{1006}$R$^{1007}$, -NR$^{1006}$R$^{1007}$, and -(OSiR$^{1006}$R$^{1007}$)$_h$(OSiR$^{1006}$R$^{1007}$R$^{1008}$) (wherein $R^{1006}$, $R^{1007}$, and $R^{1008}$ may be the same or may be different from each other and each represent a hydrogen atom or a monovalent hydrocarbon group having 1 to 18 carbon atoms, and an average of "h" is 1 to 4), $R^{1002}$ represents $R^{1001}$, a hydrogen atom, or a monovalent hydrocarbon group having 1 to 18 carbon atoms, $R^{1003}$ represents a -[O(R$^{1009}$O)$_j$]- group ($R^{1009}$ is an alkylene group having 1 to 18 carbon atoms, and "j" is an integer from 1 to 4), $R^{1004}$ represents a divalent hydrocarbon group having 1 to 18 carbon atoms, $R^{1005}$ represents a monovalent hydrocarbon group having 1 to 18 carbon atoms, and "x", "y", and "z" are numerals that satisfy the relationships of $x + y + 2z = 3$, $0 \leq x \leq 3$, $0 \leq y \leq 2$, and $0 \leq z \leq 1$.

[Chem. 10]

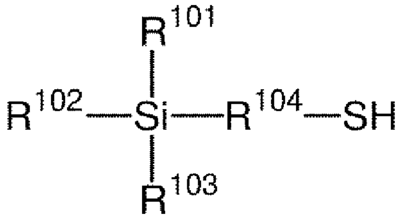

(1)

wherein $R^{101}$ to $R^{103}$ each represent a linear or branched alkyl group having 1 to 12 carbon atoms, a linear or branched alkoxy group having 1 to 12 carbon atoms, or a group represented by $-O-(R^{111}-O)_z-R^{112}$ (z $R^{111}$s each represent a linear or branched divalent hydrocarbon group having 1 to 30 carbon atoms, and may be the same or different from each other. $R^{112}$ represents a linear or branched alkyl group having 1 to 30 carbon atoms, a linear or branched alkenyl group having 2 to 30 carbon atoms, an aryl group having 6 to 30 carbon atoms, or an aralkyl group having 7 to 30 carbon atoms, "z" represents an integer from 1 to 30.), $R^{101}$ to $R^{103}$ may be the same or different from each other, and $R^{104}$ represents a linear or branched alkylene group having 1 to 6 carbon atoms.

[Chem. 11]

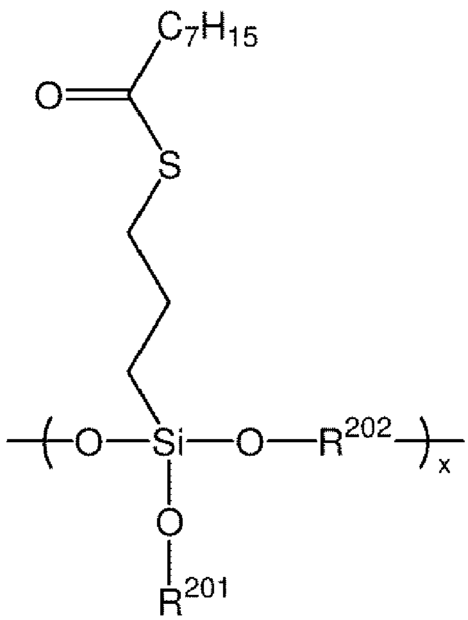

(2)

[Chem. 12]

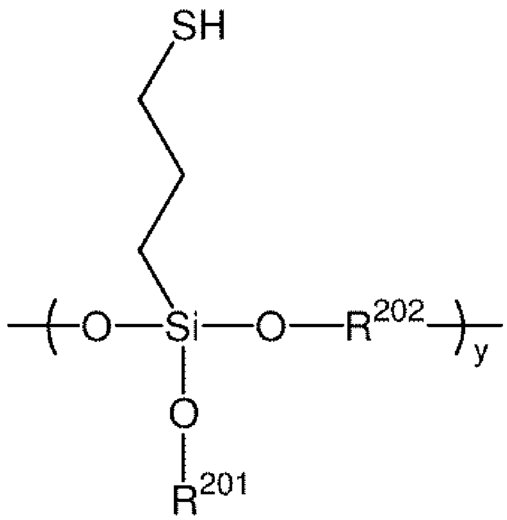

(3)

wherein "x" is an integer equal to or greater than 0, "y" is an integer equal to or greater than 1, each $R^{201}$ represents a hydrogen atom, a halogen atom, a linear or branched alkyl group having 1 to 30 carbon atoms, a linear or branched alkenyl group having 2 to 30 carbon atoms, a linear or branched alkynyl group having 2 to 30 carbon atoms, or a group obtained by substituting a hydrogen atom at the end of the alkyl group with a hydroxyl group or a carboxyl group, each $R^{202}$ represents a linear or branched alkylene group having 1 to 30 carbon atoms, a linear or branched alkenylene group having 2 to 30 carbon atoms, or a linear or branched alkynylene group having 2 to 30 carbon atoms, and $R^{201}$ and $R^{202}$ may form a ring structure.

As the mercapto-based silane coupling agent, for example, mercapto-based silane coupling agents manufactured by and available from Momentive Performance Materials, Inc., Evonik Degussa GmbH, etc., can be used. One of these mercapto-based silane coupling agents can be used alone, or two or more of these mercapto-based silane coupling agents can be used in combination.

Hereinafter, the compound represented by the above formula (S1) will be described.

In formula (S1), preferably, $R^{1005}$, $R^{1006}$, $R^{1007}$, and $R^{1008}$ are each independently a group selected from the group consisting of a linear, cyclic, or branched alkyl group, alkenyl group, aryl group, and aralkyl group each having 1 to 18 carbon atoms. In addition, in the case where $R^{1002}$ is a monovalent hydrocarbon group having 1 to 18 carbon atoms, $R^{1002}$ is preferably a group selected from the group consisting of a linear, cyclic, or branched alkyl group, alkenyl group, aryl group, and aralkyl group. $R^{1009}$ is preferably a linear, cyclic, or branched alkylene group, and is particularly preferably a linear alkylene group. Examples of $R^{1004}$ include an alkylene group having 1 to 18 carbon atoms, an alkenylene group having 2 to 18 carbon atoms, a cycloalkylene group having 5 to 18 carbon atoms, a cycloalkylalkylene group having 6 to 18 carbon atoms, an arylene group having 6 to 18 carbon atoms, and an aralkylene group having 7 to 18 carbon atoms. The alkylene group and the alkenylene group may each be either linear or branched, and the cycloalkylene group, the cycloalkylalkylene group, the arylene group, and the aralkylene group may each have a functional group, such as a lower alkyl group, on the ring thereof. $R^{1004}$ is preferably an alkylene group having 1 to 6 carbon atoms, and is particularly preferably a linear alkylene group such as a methylene group, an ethylene group, a trimethylene group, a tetramethylene group, a pentamethylene group, and a hexamethylene group.

Specific examples of $R^{1002}$, $R^{1005}$, $R^{1006}$, $R^{1007}$, and $R^{1008}$ in formula (S 1) include a methyl group, an ethyl group, an n-propyl group, an isopropyl group, an n-butyl group, an isobutyl group, a sec-butyl group, a tert-butyl group, a pentyl group, a hexyl group, an octyl group, a decyl group, a dodecyl group, a cyclopentyl group, a cyclohexyl group, a vinyl group, a propenyl group, an allyl group, a hexenyl group, an octenyl group, a cyclopentenyl group, a cyclohexenyl group, a phenyl group, a tolyl group, a xylyl group, a naphthyl group, a benzyl group, a phenethyl group, and a naphthylmethyl group.

Examples of the linear alkylene group as $R^{1009}$ in formula (S1) include a methylene group, an ethylene group, an n-propylene group, an n-butylene group, and a hexylene group, and examples of the branched alkylene group as $R^{1009}$ in formula (S 1) include an isopropylene group, an isobutylene group, and a 2-methylpropylene group.

Specific examples of the silane coupling agent represented by formula (S 1) include 3-hexanoylthiopropyltriethoxysilane, 3-octanoylthiopropyltriethoxysilane, 3-decanoylthiopropyltriethoxysilane, 3-lauroylthiopropyltriethoxysilane, 2-hexanoylthioethyltriethoxysilane, 2-octanoylthioethyltriethoxysilane, 2-decanoylthioethyltriethoxysilane, 2-lauroylthioethyltriethoxysilane, 3-hexanoylthiopropyltrimethoxysilane, 3-octanoylthiopropyltrimethoxysilane, 3-decanoylthiopropyltrimethoxysilane, 3-lauroylthiopropyltrimethoxysilane, 2-hexanoylthioethyltrimethoxysilane, 2-octanoylthioethyltrimethoxysilane, 2-decanoylthioethyltrimethoxysilane, and 2-lauroylthioethyltrimethoxysilane. Among them, 3-octanoylthiopropyltriethoxysilane is preferable.

The silane coupling agent represented by formula (S 1) has a thioester structure (that is, a protected mercapto group) in the molecule thereof and has low reactivity with the rubber component up to high temperatures, and strong bond between the rubber component, the silane coupling agent, and the silica during kneading can be suppressed, and the silica can be appropriately dispersed. Thus, the advantageous effects of the present disclosure tend to be able to be more favorably achieved.

Next, the compound represented by the above formula (1) will be described.

$R^{101}$ to $R^{103}$ each represent a linear or branched alkyl group having 1 to 12 carbon atoms, a linear or branched alkoxy group having 1 to 12 carbon atoms, or a group represented by $-O-(R^{111}-O)_z-R^{112}$. From the viewpoint of favorably achieving the advantageous effects of the present disclosure, at least one of $R^{101}$ to $R^{103}$ is preferably a group represented by $-O-(R^{111}-O)_z-R^{112}$, and, more preferably, two of $R^{101}$ to $R^{103}$ are each a group represented by $-O-(R^{111}-O)_z-R^{112}$, and one of $R^{101}$ to $R^{103}$ is a linear or branched alkoxy group having 1 to 12 carbon atoms.

As for $R^{101}$ to $R^{103}$, examples of the linear or branched alkyl group having 1 to 12 carbon atoms (preferably 1 to 5 carbon atoms) include a methyl group, an ethyl group, an n-propyl group, an isopropyl group, an n-butyl group, an isobutyl group, a sec-butyl group, a tert-butyl group, a pentyl group, a hexyl group, a heptyl group, a 2-ethylhexyl group, an octyl group, and a nonyl group.

As for $R^{101}$ to $R^{103}$, examples of the linear or branched alkoxy group having 1 to 12 carbon atoms (preferably 1 to 5 carbon atoms) include a methoxy group, an ethoxy group, an n-propoxy group, an isopropoxy group, an n-butoxy group, an isobutoxy group, a sec-butoxy group, a tert-butoxy group, a pentyloxy group, a hexyloxy group, a heptyloxy group, a 2-ethylhexyloxy group, an octyloxy group, and a nonyloxy group.

As for $R^{101}$ to $R^{103}$, in $-O-(R^{111}-O)_z-R^{112}$, $R^{111}$ represents a linear or branched divalent hydrocarbon group having 1 to 30 carbon atoms (preferably 1 to 15 carbon atoms, more preferably 1 to 3 carbon atoms). Examples of the hydrocarbon group include a linear or branched alkylene group having 1 to 30 carbon atoms, a linear or branched alkenylene group having 2 to 30 carbon atoms, a linear or branched alkynylene group having 2 to 30 carbon atoms, and an arylene group having 6 to 30 carbon atoms. Among them, a linear or branched alkylene group having 1 to 30 carbon atoms is preferable.

As for $R^{111}$, examples of the linear or branched alkylene group having 1 to 30 carbon atoms (preferably 1 to 15 carbon atoms, more preferably 1 to 3 carbon atoms) include a methylene group, an ethylene group, a propylene group, a butylene group, a pentylene group, a hexylene group, a heptylene group, an octylene group, a nonylene group, a decylene group, an undecylene group, a dodecylene group, a tridecylene group, a tetradecylene group, a pentadecylene group, a hexadecylene group, a heptadecylene group, and an octadecylene group.

As for $R^{111}$, examples of the linear or branched alkenylene group having 2 to 30 carbon atoms (preferably 2 to 15 carbon atoms, more preferably 2 or 3 carbon atoms) include a vinylene group, a 1-propenylene group, a 2-propenylene group, a 1-butenylene group, a 2-butenylene group, a 1-pentenylene group, a 2-pentenylene group, a 1-hexenylene group, a 2-hexenylene group, and a 1-octenylene group.

As for $R^{111}$, examples of the linear or branched alkynylene group having 2 to 30 carbon atoms (preferably 2 to 15 carbon atoms, more preferably 2 or 3 carbon atoms) include an ethynylene group, a propynylene group, a butynylene group, a pentynylene group, a hexynylene group, a heptynylene group, an octynylene group, a nonynylene group, a decynylene group, an undecynylene group, and a dodecynylene group.

As for $R^{111}$, examples of the arylene group having 6 to 30 carbon atoms (preferably 6 to 15 carbon atoms) include a phenylene group, a tolylene group, a xylylene group, and a naphthylene group.

"z" is an integer from 1 to 30, preferably an integer from 2 to 20, more preferably an integer from 3 to 7, and further preferably 5 or 6.

$R^{112}$ represents a linear or branched alkyl group having 1 to 30 carbon atoms, a linear or branched alkenyl group having 2 to 30 carbon atoms, an aryl group having 6 to 30 carbon atoms, or an aralkyl group having 7 to 30 carbon atoms. Among them, a linear or branched alkyl group having 1 to 30 carbon atoms is preferable.

As for $R^{112}$, examples of the linear or branched alkyl group having 1 to 30 carbon atoms (preferably 3 to 25 carbon atoms, more preferably 10 to 15 carbon atoms) include a methyl group, an ethyl group, an n-propyl group, an iso-propyl group, an n-butyl group, an isobutyl group, a sec-butyl group, a tert-butyl group, a pentyl group, a hexyl group, a heptyl group, a 2-ethylhexyl group, an octyl group, a nonyl group, a decyl group, an undecyl group, a dodecyl group, a tridecyl group, a tetradecyl group, a pentadecyl group, and an octadecyl group.

As for $R^{112}$, examples of the linear or branched alkenyl group having 2 to 30 carbon atoms (preferably 3 to 25 carbon atoms, more preferably 10 to 15 carbon atoms) include a vinyl group, a 1-propenyl group, a 2-propenyl group, a 1-butenyl group, a 2-butenyl group, a 1-pentenyl group, a 2-pentenyl group, a 1-hexenyl group, a 2-hexenyl group, a 1-octenyl group, a decenyl group, an undecenyl group, a dodecenyl group, a tridecenyl group, a tetradecenyl group, a pentadecenyl group, and an octadecenyl group.

As for $R^{112}$, examples of the aryl group having 6 to 30 carbon atoms (preferably 10 to 20 carbon atoms) include a phenyl group, a tolyl group, a xylyl group, a naphthyl group, and a biphenyl group.

As for $R^{112}$, examples of the aralkyl group having 7 to 30 carbon atoms (preferably 10 to 20 carbon atoms) include a benzyl group and a phenethyl group.

Specific examples of the group represented by $-O-(R^{111}-O)_z-R^{112}$ include $-O-(C_2H_4-O)_5-C_{11}H_{23}$, $-O-(C_2H_4-O)_5-C_{12}H_{25}$, $-O-(C_2H_4-O)_5-C_{13}H_{27}$, $-O-(C_2H_4-O)_5-C_{14}H_{29}$, $-O-(C_2H_4-O)_5-C_{15}H_{31}$, $-O-(C_2H_4-O)_3-C_{13}H_{27}$, $-O-(C_2H_4-O)_4-C_{13}H_{27}$, $-O-(C_2H_4-O)_6-C_{13}H_{27}$, and $-O-(C_2H_4-O)_7-C_{13}H_{27}$. Among them, $-O-(C_2H_4-O)_5-CnH_{23}$, $-O-(C_2H_4-O)_5-C_{13}H_{27}$, $-O-(C_2H_4-O)_5-C_{15}H_{31}$, and $-O-(C_2H_4-O)_6-C_{13}H_{27}$ are preferable.

As for $R^{104}$, examples of the linear or branched alkylene group having 1 to 6 carbon atoms (preferably 1 to 5 carbon atoms) include the same groups as for the linear or branched alkylene group having 1 to 30 carbon atoms for $R^{111}$.

Examples of the compound represented by the above formula (1) include 3-mercaptopropyltrimethoxysilane, 3-mercaptopropyltriethoxysilane, 2-mercaptoethyltrimethoxysilane, 2-mercaptoethyltriethoxysilane, 3-mercaptopropylmethyldiethoxysilane, and a compound represented by the following formula. The compound represented by the following formula is suitable for use.

[Chem. 13]

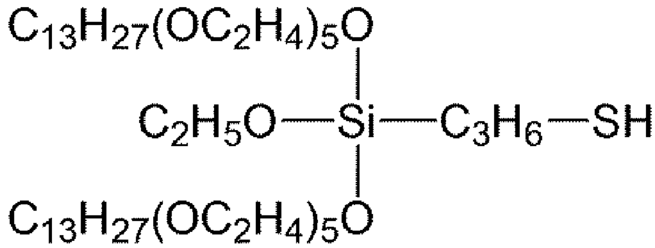

Next, the compound containing the linking unit A represented by the above formula (2) and the linking unit B represented by the above formula (3) will be described.

The compound containing the linking unit A represented by the above formula (2) and the linking unit B represented by the above formula (3) suppresses an increase in viscosity during processing as compared to a polysulfide silane such as bis-(3-triethoxysilylpropyl)tetrasulfide. This is considered to be because the sulfide moiety of the linking unit A has a C-S-C bond and thus the compound is thermally more stable than tetrasulfide and disulfide, so that the Mooney viscosity increases less.

In addition, the scorch time is inhibited from being shortened as compared to a mercapto silane such as 3-mercaptopropyltrimethoxysilane. This is considered to be because, although the linking unit B has a mercapto silane structure, the $-C_7H_{15}$ moiety of the linking unit A covers the -SH group of the linking unit B, so that a reaction with a polymer is less likely to occur and scorch is less likely to occur.

From the viewpoint of enhancing the effect of suppressing an increase in viscosity during processing and the effect of inhibiting the scorch time from being shortened as described above, the amount of the linking unit A in the silane coupling agent having the above structure is preferably not less than 30% by mole and more preferably not less than 50% by mole, and is preferably not greater than 99% by mole and more preferably not greater than 90% by mole. In addition, the amount of the linking unit B is preferably not less than 1% by mole, more preferably not less than 5% by mole, and further preferably not less than 10% by mole, and is preferably not greater than 70% by mole, more preferably not greater than 65% by mole, and further preferably not greater than 55% by mole. Moreover, the total amount of the linking units A and B is preferably not less than 95% by mole, more preferably not less than 98% by mole, and particularly preferably 100% by mole. The amount of the linking unit A or B is an amount including the case where the linking unit A or B is located at the end of the silane coupling agent. The mode in the case where the linking unit A or B is located at the end of the silane coupling agent is not particularly limited, and a unit corresponding to formula (2) or (3) representing the linking unit A or B may be formed.

As for $R^{201}$, examples of the halogen atom include a chlorine atom, a bromine atom, and a fluorine atom.

As for $R^{201}$, examples of the linear or branched alkyl group having 1 to 30 carbon atoms include a methyl group, an ethyl group, an n-propyl group, an isopropyl group, an n-butyl group, an iso-butyl group, a sec-butyl group, a tert-butyl group, a pentyl group, a hexyl group, a heptyl group, a 2-ethylhexyl group, an octyl group, a nonyl group, and a decyl group. The number of carbon atoms of the alkyl group is preferably 1 to 12.

As for $R^{201}$, examples of the linear or branched alkenyl group having 2 to 30 carbon atoms include a vinyl group, a 1-propenyl group, a 2-propenyl group, a 1-butenyl group, a 2-butenyl group, a 1-pentenyl group, a 2-pentenyl group, a 1-hexenyl group, a 2-hexenyl group, and a 1-octenyl group. The number of carbon atoms of the alkenyl group

is preferably 2 to 12.

As for $R^{201}$, examples of the linear or branched alkynyl group having 2 to 30 carbon atoms include an ethynyl group, a propynyl group, a butynyl group, a pentynyl group, a hexynyl group, a heptynyl group, an octynyl group, a nonynyl group, a decynyl group, an undecynyl group, and a dodecynyl group. The number of carbon atoms of the alkynyl group is preferably 2 to 12.

As for $R^{202}$, examples of the linear or branched alkylene group having 1 to 30 carbon atoms include an ethylene group, a propylene group, a butylene group, a pentylene group, a hexylene group, a heptylene group, an octylene group, a nonylene group, a decylene group, an undecylene group, a dodecylene group, a tridecylene group, a tetradecylene group, a pentadecylene group, a hexadecylene group, a heptadecylene group, and an octadecylene group. The number of carbon atoms of the alkylene group is preferably 1 to 12.

As for $R^{202}$, examples of the linear or branched alkenylene group having 2 to 30 carbon atoms include a vinylene group, a 1-propenylene group, a 2-propenylene group, a 1-butenylene group, a 2-butenylene group, a 1-pentenylene group, a 2-pentenylene group, a 1-hexenylene group, a 2-hexenylene group, and a 1-octenylene group. The number of carbon atoms of the alkenylene group is preferably 2 to 12.

As for $R^{202}$, examples of the linear or branched alkynylene group having 2 to 30 carbon atoms include an ethynylene group, a propynylene group, a butynylene group, a pentynylene group, a hexynylene group, a heptynylene group, an octynylene group, a nonynylene group, a decynylene group, an undecynylene group, and a dodecynylene group. The number of carbon atoms of the alkynylene group is preferably 2 to 12.

In the compound containing the linking unit A represented by the above formula (2) and the linking unit B represented by the above formula (3), the number of repetitions (x + y) that is the sum of the number of repetitions (x) of the linking unit A and the number of repetitions (y) of the linking unit B is preferably in the range of 3 to 300. When the number of repetitions (x + y) is within this range, since $-C_7H_{15}$ of the linking unit A covers the mercapto silane of the linking unit B, the scorch time can be inhibited from being shortened, and good reactivity with the silica and the rubber component can be ensured.

From the viewpoint of ensuring sufficient effects such as low fuel consumption performance, the amount of the mercapto-based silane coupling agent per 100 parts by mass of the silica is preferably not less than 0.5 parts by mass, more preferably not less than 1 part by mass, more preferably not less than 2 parts by mass, and more preferably not less than 5 parts by mass. In addition, from the viewpoint of achieving an effect, by blending the mercapto-based silane coupling agent, corresponding to an increase in cost and the viewpoint of rubber strength and wear resistance, the amount is preferably not greater than 20 parts by mass, more preferably not greater than 18 parts by mass, more preferably not greater than 17 parts by mass, more preferably not greater than 15 parts by mass, and further preferably not greater than 12 parts by mass.

(Other Silane Coupling Agents)

In the present disclosure, the rubber composition may further contain another silane coupling agent, or does not have to further contain another silane coupling agent, in addition to the mercapto-based silane coupling agent. Examples of the other silane coupling agent include 3-trimethoxysilylpropyl-N,N-dimethylthiocarbamoyl tetrasulfide, 3-triethoxysilylpropyl-N,N-dimethylthiocarbamoyl tetrasulfide, 2-triethoxysilylethyl-N,N-dimethylthiocarbamoyl tetrasulfide, 3-trimethoxysilylpropyl benzothiazolyl tetrasulfide, 3-triethoxysilylpropyl benzothiazolyl tetrasulfide, 3-triethoxysilylpropyl methacrylate monosulfide, 3-trimethoxysilylpropyl methacrylate monosulfide, bis(3-triethoxysilylpropyl)tetrasulfide, bis(3-triethoxysilylpropyl)trisulfide, bis(3-triethoxysilylpropyl)disulfide, bis(2-triethoxysilylethyl)tetrasulfide, bis(3-trimethoxysilylpropyl)tetrasulfide, bis(2-trimethoxysilylethyl)tetrasulfide, bis(3-diethoxymethylsilylpropyl)tetrasulfide, dimethoxymethylsilylpropyl-N,N-dimethylthiocarbamoyl tetrasulfide, and dimethoxymethylsilylpropylbenzothiazole tetrasulfide. One of these other silane coupling agents can be used alone, or two or more of these other silane coupling agents can be used in combination.

<Liquid Rubber>

In the present disclosure, the "liquid rubber" means a rubber in liquid form at normal temperature (25°C). In addition, the "liquid rubber" is also called "liquid polymer", "liquid diene polymer", etc. The liquid rubber may be hydrogenated or does not have to be hydrogenated, and may be modified with a functional group such as a carboxy group, or does not have to be modified with such a functional group. In addition, in the case where the liquid rubber is a copolymer, the liquid rubber may be a random copolymer of each monomer or a block copolymer, but is preferably a random copolymer. The liquid rubber of the present disclosure is not included in the above rubber component.

The liquid rubber is not particularly limited, and examples of the liquid rubber include a liquid styrene-butadiene rubber (liquid SBR), a liquid butadiene rubber (liquid BR), a liquid isoprene rubber (liquid IR), and a liquid styrene-isoprene rubber (liquid SIR). As the liquid rubber, for example, liquid rubbers manufactured by and available from Kuraray

Co., Ltd., Nippon Soda Co., Ltd., Cray Valley, Noveon, etc., can be used. Among them, at least one of a liquid SBR and a liquid BR is preferably contained, a liquid SBR is more preferably contained, and the liquid rubber is preferably only a liquid SBR. One of these liquid rubbers can be used alone, or two or more of these liquid rubbers can be used in combination.

(Liquid SBR)

The styrene content of the liquid SBR is not particularly limited, but is preferably not less than 15% by mass, more preferably not less than 20% by mass, and further preferably not less than 25% by mass. In addition, the styrene content is preferably not greater than 40% by mass, more preferably not greater than 30% by mass, and more preferably not greater than 27% by mass. When the styrene content of the liquid SBR is within the above range, the advantageous effects of the present disclosure tend to be able to be more favorably achieved.

The vinyl content (1,2-bond butadiene unit content) of the liquid SBR is not particularly limited, but is preferably 10.0 to 80.0%. The vinyl content is preferably not less than 25% and more preferably not less than 40%. In addition, the vinyl content is preferably not greater than 75% and more preferably not greater than 70%. When the vinyl content of the liquid SBR is within the above range, the advantageous effects of the present disclosure tend to be able to be more favorably achieved.

(Liquid BR)

As the liquid BR, for example, a low-vinyl-content BR having a vinyl content of 5 to 55% and a high-vinyl-content BR having a vinyl content of 70 to 90% can be used.

(Number-Average Molecular Weight (Mn) of Liquid Rubber)

The number-average molecular weight (Mn) of the liquid rubber is preferably less than 50000, more preferably not greater than 25000, more preferably not greater than 10000, and further preferably not greater than 7000. In addition, the lower limit of the Mn is not particularly limited, but the Mn is preferably not less than 1000, more preferably not less than 2500, and further preferably not less than 3500. When the Mn of the liquid rubber is within the above range, the liquid rubber easily enters between molecules of the styrene-butadiene rubber in the SBR phase, so that the effect of improving processability tends to be more favorably achieved. The Mn of the liquid rubber in the present description is a value obtained by measurement using gel permeation chromatograph (GPC) and conversion based on a polystyrene standard.

(Amount of Liquid Rubber)

The amount of the liquid rubber per 100 parts by mass of the rubber component is preferably not less than 1 part by mass, more preferably not less than 5 parts by mass, and further preferably not less than 10 parts by mass. In addition, the amount is more preferably not greater than 50 parts by mass, more preferably not greater than 30 parts by mass, more preferably not greater than 20 parts by mass, and further preferably not greater than 15 parts by mass. When the amount of the liquid rubber is within the above range, the effect of improving low fuel consumption performance, wet grip performance, fracture properties, and processability in a well-balanced manner as a whole tends to be more favorably achieved while the effect of improving processability is more favorably achieved.

<Resin>

The resin is not particularly limited, and resins that are commonly used for conventional tire rubber compositions can be used. Examples of the resin include aromatic resins, aliphatic petroleum resins (for example, C5-based petroleum resins), terpene resins, and rosin-based resins. Among them, aromatic resins are preferable. One of these resins can be used alone, or two or more of these resins can be used in combination.

(Aromatic Resins)

In the present disclosure, "aromatic resin" means a resin whose structure contains an aromatic ring. The aromatic resin is not particularly limited as long as the aromatic resin is a resin that is used in this field and that contains an aromatic ring. Examples of such a resin include C9-based petroleum resins, C5C9-based petroleum resins, phenol-based resins, coumarone-based resins, and aromatic modified terpene resins. Among them, C9-based petroleum resins are suitable for use since C9-based petroleum resins have particularly excellent compatibility with SBR.

«C9-Based Petroleum Resins»

Examples of C9-based petroleum resins include resins obtained by cation polymerization of monomers such as vinyltoluene, alkylstyrene, and indene, which are petroleum fractions (C9 fractions) having 8 to 10 carbon atoms. Specific examples of C9-based petroleum resins include styrene-based resins. The styrene-based resins are not particularly limited, but $\alpha$-methylstyrene-based resins (AMS) are suitably used. Examples of $\alpha$-methylstyrene-based resins include homopolymers of $\alpha$-methylstyrene (poly-$\alpha$-methylstyrene) and copolymers of $\alpha$-methylstyrene and other compounds including aromatic compounds and phenol-based compounds. Examples of other compounds that can form the copolymers include styrene, methylstyrene, methoxystyrene, and divinylbenzene. As $\alpha$-methylstyrene-based resins, resins manufactured by Arizona Chemical Company, etc., are suitably used.

«C5C9-Based Petroleum Resins»

C5C9-based petroleum resins refer to resins obtained by copolymerizing a C5 fraction and a C9 fraction, and are also referred to as aliphatic/aromatic copolymerized petroleum resins. In addition, hydrogenated products of the above petroleum resins may be used. As C5C9-based petroleum resins, for example, resins manufactured by and available from Zibo Luhua Hongjin New Material Co., Ltd., Shandong Qilong Chemical Co., Ltd., Tosoh Corporation, etc., can be used.

«Phenol-Based Resins»

Phenol-based resins refer to resins whose structure contains a phenol skeleton, and examples of phenol-based resins include phenol formaldehyde resins, alkylphenol formaldehyde resins, alkylphenol acetylene resins, and oil-modified phenol formaldehyde resins.

<<Coumarone-Based Resins>>

Coumarone-based resins refer to resins containing coumarone as a main component, and examples of coumarone-based resins include coumarone resins, coumaroneindene resins, and copolymerized resins containing coumarone, indene, and styrene as main components. As coumarone-based resins, for example, resins manufactured by and available from NITTO CHEMICAL CO., LTD., etc., can be used.

<<Aromatic Modified Terpene Resins>>

Aromatic modified terpene resins refer to resins made from terpene compounds and aromatic compounds. Examples of aromatic compounds that are raw materials for aromatic modified terpene resins include styrene, $\alpha$-methylstyrene, vinyltoluene, and divinyltoluene. As aromatic modified terpene resins, for example, resins manufactured by and available from Yasuhara Chemical Co., Ltd., etc., can be used.

(Mw of Resin)

From the viewpoint that the resin is less likely to volatilize and grip performance is good, the weight-average molecular weight (Mw) of the resin is preferably not less than 300, more preferably not less than 400, and further preferably not less than 500. In addition, the Mw is preferably not greater than 15000, more preferably not greater than 10000, and further preferably not greater than 8000. The weight-average molecular weight (Mw) in the present description can be obtained by conversion, based on a polystyrene standard, of a value measured by gel permeation chromatography (GPC) (GPC-8000 series manufactured by Tosoh Corporation, detector: differential refractometer, column: TSKgel SuperMultipore HZ-M manufactured by Tosoh Corporation).

(Softening Point of Resin)

From the viewpoint of grip performance, the softening point of the resin is preferably not higher than 160°C, more preferably not higher than 145°C, and further preferably not higher than 130°C. In addition, from the viewpoint of grip performance, the softening point is preferably not lower than 20°C, more preferably not lower than 35°C, and further preferably not lower than 50°C. The softening point in the present description is a softening point that is measured with a ring and ball softening point measuring device according to JIS K6220-1: 2001 and that is a temperature at which a ball has descended.

(SP value of Resin)

The SP value of the resin is preferably not less than 8.0, more preferably not less than 8.5, and further preferably not less than 9.0. In addition, the SP value is preferably not greater than 11.0, more preferably not greater than 10.0, and further preferably not greater than 9.5. When the SP value of the resin is within the above range, the compatibility with SBR is improved, so that the advantageous effects of the present disclosure tend to be able to be more favorably achieved. The SP value of the resin in the present description means a solubility parameter calculated by the Hoy method on the basis of the structure of the compound. The smaller the difference between the SP values of two components is, the better the compatibility is. The Hoy method is, for example, the calculation method described in K. L. Hoy "Table of Solubility Parameters", Solvent and Coatings Materials Research and Development Department, Union Carbites Corp. (1985).

(Amount of Resin)

The amount of the resin per 100 parts by mass of the rubber component is preferably not less than 1 part by mass, more preferably not less than 2 parts by mass, more preferably not less than 3 parts by mass, and further preferably not less than 4 parts by mass. In addition, the amount is preferably not greater than 40 parts by mass, more preferably not greater than 30 parts by mass, more preferably not greater than 20 parts by mass, and further preferably not greater than 15 parts by mass. When the amount of the resin is within the above range, the effect of improving low fuel consumption performance, wet grip performance, fracture properties, and processability in a well-balanced manner as a whole tends to be more favorably achieved while the effect of improving wet grip performance is more favorably achieved.

<Other Components>

In addition to the above-described components, the rubber composition according to the present disclosure can contain other components that are generally used for producing rubber compositions, for example, an oil, stearic acid, zinc oxide, an antioxidant, a wax, a processing aid, a vulcanizing agent, a vulcanization accelerator, etc., as appropriate.

(Oil)

The oil is not particularly limited, any of oils that can be normally used in the rubber industry is suitable for use, and examples of the oil include process oils such as paraffinic process oil, aromatic process oil, and naphthenic process oil. In addition, examples of the oil also include a process oil having a low content of a polycyclic aromatic (PCA) compound for an environmental measure. Examples of the low PCA content process oil include treated distillate aromatic extract (TDAE) obtained by re-extracting aromatic process oil, aroma substitute oil, which is a mixture of asphalt and naphthenic oil, mild extraction solvates (MES), and heavy naphthenic oil. Among them, aromatic process oil is preferable, and TDAE oil is more preferable. As the oil, for example, oils manufactured by and available from H&R, JXTG Nippon Oil & Energy Corporation, Idemitsu Kosan Co., Ltd., Sankyo Yuka Kogyo K.K., etc., can be used. One of these oils can be used alone, and two or more of these oils can be used in combination.

In the case of containing an oil, the amount of the oil per 100 parts by mass of the rubber component is not particularly limited, but is more preferably not less than 0.5 parts by mass, more preferably not less than 1 part by mass, and further preferably not less than 3 parts by mass. In addition, the amount is preferably not greater than 25 parts by mass, more preferably not greater than 10 parts by mass, and further preferably not greater than 7 parts by mass. When the amount of the oil is within the above range, the balance between low fuel consumption performance, wet grip performance, fracture properties, and processability is excellent, and the advantageous effects of the present disclosure tend to be more favorably achieved. The amount of the oil also includes the amount of oil used for oil extension or oil treatment.

(Stearic Acid)

In the case of containing stearic acid, from the viewpoint of processability, the amount of the stearic acid per 100 parts by mass of the rubber component is preferably not less than 0.5 parts by mass and more preferably not less than 1 part by mass. In addition, from the viewpoint of vulcanization rate, the amount is preferably not greater than 10 parts by mass and more preferably not greater than 5 parts by mass.

(Zinc Oxide)

In the case of containing zinc oxide, from the viewpoint of processability, the amount of the zinc oxide per 100 parts by mass of the rubber component is preferably not less than 0.5 parts by mass and more preferably not less than 1 part by mass. In addition, from the viewpoint of wear resistance, the amount is preferably not greater than 10 parts by mass and more preferably not greater than 5 parts by mass.

(Antioxidant)

The antioxidant is not particularly limited, any of antioxidants that are normally used in the rubber industry is suitable for use, and examples of the antioxidant include quinoline-based antioxidants, quinone-based antioxidants, phenol-based antioxidants, phenylenediamine-based antioxidants, and carbamic acid metal salts. Among them, at least one of a quinoline-based antioxidant and a phenylenediamine-based antioxidant is preferably used, and these antioxidants are more preferably used in combination. An example of quinoline-based antioxidants is 2,2,4-trimethyl-1,2-dihydroquinoline polymer (TMDQ). Examples of phenylenediamine-based antioxidants include N-isopropyl-N'-phenyl-p-phenylenediamine (IPPD), N-(1,3-dimethylbutyl)-N'-phenyl-p-phenylenediamine (6PPD), N,N'-diphenyl-p-phenylenediamine, N,N'-di-2-naphthyl-p-phenylenediamine, N-cyclohexyl-N'-phenyl-p-phenylenediamine, N,N'-bis(1-methylheptyl)-p-phenylenediamine, N,N'-bis(1,4-dimethylpentyl)-p-phenylenediamine, N,N'-bis(1-ethyl-3-methylpentyl)-p-phenylenediamine, N-4-methyl-2-pentyl-N'-phenyl-p-phenylenediamine, N,N'-diaryl-p-phenylenediamine, hindered diaryl-p-phenylenediamine, phenylhexyl-p-phenylenediamine, and phenyloctyl-p-phenylenediamine. Among them, N-(1,3-dimethylbutyl)-N'-phenyl-p-phenylenediamine (6PPD) is preferable. A specific example of a preferable combination in the case where a quinoline-based antioxidant and a phenylenediamine-based antioxidants are used in combination as the antioxidant is a combination of TMDQ and 6PPD. As the antioxidant, for example, antioxidants manufactured by and available from Ouchi Shinko Chemical Industrial Co., Ltd., Kawaguchi Chemical Industry Co., Ltd., Sumitomo Chemical Company, Limited, etc., can be used. One of these antioxidants can be used alone, or two or more of these antioxidants can be used in combination.

In the case of containing an antioxidant, the amount of the antioxidant per 100 parts by mass of the rubber component is preferably not less than 0.5 parts by mass, more preferably not less than 0.8 parts by mass, and further preferably not less than 1.0 part by mass. In addition, the amount is preferably not greater than 7.0 parts by mass, more preferably not greater than 5.0 parts by mass, and further preferably not greater than 3.0 parts by mass. When the amount of the antioxidant is within the above range, a sufficient anti-aging effect can be achieved, and discoloration due to deposition of the antioxidant on the surface of a tire tends to be suppressed.

(Wax)

The wax is not particularly limited, any of waxes that are normally used in the rubber industry is suitable for use, and examples of the wax include petroleum waxes, mineral waxes, and synthetic waxes. Among them, petroleum waxes are preferable. Examples of petroleum waxes include paraffin waxes, microcrystalline waxes, and refined special waxes thereof. As the wax, for example, waxes manufactured by and available from Ouchi Shinko Chemical Industrial Co., Ltd., NIPPON SEIRO CO., LTD., Paramelt B.V., etc., can be used. One of these waxes can be used alone, or two or more of these waxes can be used in combination.

In the case of containing a wax, from the viewpoint of weather resistance of rubber, the amount of the wax per 100 parts by mass of the rubber component is preferably not less than 0.3 parts by mass, more preferably not less than 0.7 parts by mass, and further preferably not less than 0.8 parts by mass. In addition, from the viewpoint of preventing whitening of a tire due to blooming, the amount is preferably not greater than 3.0 parts by mass, more preferably not greater than 2.5 parts by mass, and further preferably not greater than 2.0 parts by mass.

(Processing Aid)

Examples of the processing aid include fatty acid metal salts, fatty acid amides, amide esters, silica surfactants, fatty acid esters, mixtures of fatty acid metal salts and amide esters, and mixtures of fatty acid metal salts and fatty acid amides. Among them, fatty acid metal salts are preferable. As the processing aid, for example, processing aids manufactured by Struktol Company of America, etc., can be used. One of these processing aids can be used alone, or two or more of these processing aids can be used in combination.

In the case of containing a processing aid, the amount of the processing aid per 100 parts by mass of the rubber component is preferably not less than 0.5 parts by mass, more preferably not less than 0.8 parts by mass, and further preferably not less than 1.0 part by mass. In addition, the amount of the processing aid is preferably not greater than 10.0 parts by mass, more preferably not greater than 8.0 parts by mass, and further preferably not greater than 6.0 parts

by mass. When the amount of the processing aid is within the above range, the advantageous effects of the present disclosure tend to be able to be more favorably achieved.

(Vulcanizing Agent)

The vulcanizing agent is not particularly limited, known vulcanizing agents can be used, and examples of the vulcanizing agent include organic peroxides such as dicumyl peroxide, sulfur-based vulcanizing agents, resin vulcanizing agents, and metal oxides such as magnesium oxide. Among them, sulfur-based vulcanizing agents are preferable. As sulfur-based vulcanizing agents, for example, sulfur donors such as sulfur and morpholine disulfide, etc., can be used. Among them, sulfur is preferably used. One of these vulcanizing agents can be used alone, or two or more of these vulcanizing agents can be used in combination.

Examples of the sulfur include powdery sulfur, precipitated sulfur, colloidal sulfur, surface-treated sulfur (oil-treated sulfur, special sulfur treated with a dispersant, master batch type sulfur, etc.), and insoluble sulfur (oil-treated insoluble sulfur, etc.), and any of these sulfurs is suitably used. As the sulfur, for example, sulfurs manufactured by and available from Tsurumi Chemical Industry Co., Ltd., Karuizawa Sulfur Co, Ltd., SHIKOKU CHEMICALS CORPORATION, Flexsys, Nippon Kanryu Industry Co., Ltd., Hosoi Chemical Industry Co., Ltd., etc., can be used.

In the case of containing a vulcanizing agent, the amount of the vulcanizing agent per 100 parts by mass of the rubber component is preferably not less than 0.5 parts by mass, more preferably not less than 1.0 part by mass, and more preferably not less than 1.5 parts by mass. In addition, the amount is preferably not greater than 6.0 parts by mass, more preferably not greater than 5.0 parts by mass, and further preferably not greater than 4.0 parts by mass. When the amount of the vulcanizing agent is within the above range, an appropriate reinforcing effect tends to be achieved, and the advantageous effects of the present disclosure tend to be able to be more favorably achieved. In the case where sulfur is used as the vulcanizing agent, the amount of the sulfur means, in the case where sulfur such as oil-treated sulfur containing a component other than sulfur is used, the amount of a sulfur component itself contained in the oil-treated sulfur.

(Vulcanization Accelerator)

The vulcanization accelerator is not particularly limited, known vulcanization accelerators can be used, and examples of the vulcanization accelerator include sulfenamide-based vulcanization accelerators, thiazole-based vulcanization accelerators, thiuram-based vulcanization accelerators, thiourea-based vulcanization accelerators, guanidine-based vulcanization accelerators, dithiocarbamic acid-based vulcanization accelerators, aldehydeamine-based vulcanization accelerators, aldehyde-ammonia-based vulcanization accelerators, imidazoline-based vulcanization accelerators, and xanthate-based vulcanization accelerators. Among them, sulfenamide-based vulcanization accelerators, guanidine-based vulcanization accelerators, and thiuram-based vulcanization accelerators are preferable, and a sulfenamide-based vulcanization accelerator and a guanidine-based vulcanization accelerator are more preferably used in combination. As the vulcanization accelerator, for example, vulcanization accelerators manufactured by and available from Ouchi Shinko Chemical Industrial Co., Ltd., SANSHIN CHEMICAL INDUSTRY CO., LTD., etc., can be used. One of these vulcanization accelerators can be used alone, or two or more of these vulcanization accelerators can be used in combination.

Examples of sulfenamide-based vulcanization accelerators include N-(tert-butyl)-2-benzothiazole sulfenamide (TBBS), N-cyclohexyl-2-benzothiazolyl sulfenamide (CBS), and N,N'-dicyclohexyl-2-benzothiazolyl sulfenamide (DZ). Among them, N-(tert-butyl)-2-benzothiazole sulfenamide (TBBS) is preferable for the reason that the advantageous effects of the present disclosure can be more favorably achieved.

Examples of thiuram-based vulcanization accelerators include tetramethylthiuram monosulfide, tetramethylthiuram disulfide, and tetrabenzylthiuram disulfide (TBzTD).

Examples of guanidine-based vulcanization accelerators include 1,3-diphenylguanidine (DPG), diorthotolylguanidine, and orthotolylbiguanidine. Among them, 1,3-diphenylguanidine (DPG) is preferable for the reason that the advantageous effects of the present disclosure can be more favorably achieved.

A specific example of a preferable combination in the case where a sulfenamide-based vulcanization accelerator and a guanidine-based vulcanization accelerator are used in combination as the vulcanization accelerator is a combination of TBBS and DPG.

The amount of the vulcanization accelerator per 100 parts by mass of the rubber component is preferably not less than 0.5 parts by mass, more preferably not less than 1.0 part by mass, and further preferably not less than 2.0 parts by mass. In addition, the amount is preferably not greater than 8.0 parts by mass, more preferably not greater than 7.0 parts by mass, and further preferably not greater than 6.0 parts by mass. When the amount of the vulcanization accelerator is within the above range, fracture strength and elongation tend to be ensured, and the advantageous effects of the present disclosure tend to be able to be more favorably achieved.

<Tire Tread Rubber Composition, Tire Tread, and Tire>

Since the tire tread rubber composition according to the present disclosure has excellent low fuel consumption performance, wet grip performance, and fracture properties, the tire tread rubber composition is used for the treads of tires. A tread is a portion that contacts with a road surface. In the case where a tread is formed from two or more different rubber compositions, the rubber composition according to the present disclosure can be used as at least one of the rubber compositions. In addition, in the case where a tread is composed of two or more layers including a base tread and a cap tread, the rubber composition according to the present disclosure can be used for at least the cap tread.

The tire tread rubber composition can be produced by a general method. For example, the tire tread rubber composition can be produced by a method in which the components other than the vulcanizing agent and the vulcanization accelerator, among the above respective components, are kneaded by using a sealed kneading machine such as a Banbury mixer and a kneader, or a known kneading machine generally used in the rubber industry such as an open roll (base kneading step), then the vulcanizing agent and the vulcanization accelerator are added, the mixture is further kneaded (finish kneading step), and vulcanization is performed. It should be noted that re-milling (re-kneading step) may be performed between each step.

A tire tread and a tire can be produced by a normal method using the above-described tire tread rubber composition. Specifically, a tire including a tire tread can be produced by extruding a rubber composition obtained by blending the above components, in an unvulcanized state so as to correspond to the shape of the tire tread, attaching the extruded rubber composition together with other tire members on a tire-shaping machine, shaping these members by a normal method to form an unvulcanized tire, and pressurizing and vulcanizing the unvulcanized tire in a vulcanizing machine.

The kneading conditions are not particularly limited. However, as for the kneading conditions, an example is a method in which kneading is performed at a discharge temperature of 120 to 170°C for 1 to 15 minutes in the base kneading step, kneading is performed at a discharge temperature of 120 to 170°C for 1 to 15 minutes in the re-kneading step, and kneading is performed at a discharge temperature of 70 to 110°C for 1 to 10 minutes in the finish kneading step. The vulcanization conditions are not particularly limited. As for the vulcanization conditions, an example is a method in which vulcanization is performed at 150 to 200°C for 10 to 30 minutes.

The tire according to the present disclosure may be a pneumatic tire or a nonpneumatic tire, but is preferably a pneumatic tire. In addition, the tire according to the present disclosure can be used as various tires including a tire for a passenger car, a tire for a truck or a bus, a tire for a motorcycle, a high-performance tire such as a tire for racing, a tire for winter, and a run flat tire, etc., and is particularly suitable for use as a tire for a passenger car.

The tire for a passenger car according to the present disclosure is preferably applied to a tire for a passenger car in which a relationship between a tire outer diameter Dt (mm) and a tire cross-section width Wt (mm) satisfies the following formula ($\alpha$). The tire for a passenger car that satisfies the following formula ($\alpha$) tends to have a problem with low fuel consumption performance. Thus, it is considered that the effect of improving low fuel consumption performance is likely to be favorably achieved by applying the tire for a passenger car according to the present disclosure. The value of $(Dt \wedge 2 \times \pi/4) / Wt$ is preferably not less than 1970.0, more preferably not less than 1980.0, and further preferably not less than 1990.0. In addition, the value of $(Dt \wedge 2 \times \pi/4) / Wt$ is preferably not greater than 2800.0, more preferably not greater than 2700.0, and further preferably not greater than 2600.0. The tire outer diameter Dt and the tire cross-section width Wt in the following formula ($\alpha$) are measured in a state where the tire is fitted on a predetermined rim (normal rim) and filled with air to a predetermined internal pressure (normal internal pressure, for example, 250 kPa or higher). At the time of measurement, no load is applied to the tire.

$$1963.4 \leq (Dt \wedge 2 \times \pi/4) / Wt \leq 2827.4 \qquad (\alpha)$$

In the present description, the normal rim means a rim specified in a standard on which the tire is based. The "standard rim" in the JATMA standard, the "Design Rim" in the TRA standard, and the "Measuring Rim" in the ETRTO standard are normal rims. In the present description, the normal internal pressure means an internal pressure specified in the standard on which the tire is based. The "highest air pressure" in the JATMA standard, the "maximum value" recited in "TIRE LOAD LIMITS AT VARIOUS COLD INFLATION PRESSURES" in the TRA standard, and the "INFLATION PRESSURE" in the ETRTO standard are normal internal pressures.

Specific examples of the tire size of the tire for a passenger car that satisfies the above formula ($\alpha$) include 135/45R21, 145/45R21, 155/45R21, 165/45R22, 175/45R23, 185/45R22, 115/50R17, 185/50R20, 215/50R21, 125/55R20, 135/55R20, 145/55R20, 155/55R19, 155/55R21, 175/55R19, 165/55R19, 165/55R20, 165/55R21, 175/55R22, 195/55R20, 205/55R20, 135/60R17, 165/60R12, 175/60R18, 185/60R20, 195/60R19, 205/60R18, 125/65R19, 135/65R19, 145/65R19, 155/65R18, 165/65R19, 155/70R17, 165/70R18, and 175/80R16.

EXAMPLES

The present invention will be specifically described by means of examples, but the present invention is not limited to these examples.

<Various Chemicals Used in Examples and Comparative Examples>

NR: TSR20 (isoprene-based rubber)
SBR: JSR1502 (E-SBR, styrene content: 23.5% by mass, available from JSR Corporation)
BR: UBEPOL BR150B (high-cis BR, cis content: 97%, trans content: 2%, vinyl content: 1%, available from Ube Industries, Ltd.)
Carbon black: N220 (ISAF, $N_2SA$: 111 $m^2/g$, DBP absorption amount: 115 ml/100g, available from Cabot Japan K.K.)
Silica: Zeosil 1115MP ($N_2SA$: 115 $m^2/g$, CTAB: 110 $m^2/g$, available from Solvay SA)
Silane coupling agent 1: Si266 (sulfide-based, bis(triethoxysilylpropyl)disulfide, available from Evonik Degussa GmbH)
Silane coupling agent 2: NXT (mercapto-based, 3-octanoylthiopropyltriethoxysilane, available from Momentive Performance Materials, Inc.)
Silane coupling agent 3: NXT-Z45 (mercapto-based, copolymer of linking unit A and linking unit B (linking unit A: 55% by mole, linking unit B: 45% by mole), available from Momentive Performance Materials, Inc.)
Resin: SYLVATRAXX4401 ($\alpha$-methylstyrene-based resin, softening point: 85°C, SP value: 9.1, available from Arizona Chemical Company)
Oil: Vivatec500 (TDAE oil, available from H&R)
Liquid rubber 1: RICON100 (liquid SBR, random copolymer, styrene content: 25% by mass, vinyl content: 70%, Mn: 4500, available from Cray Valley)
Liquid rubber 2: Kuraprene LBR-302 (liquid BR, Mn: 5500, available from Kuraray Co., Ltd.)
Wax: OZOACE 0355 (paraffin wax, available from NIPPON SEIRO CO., LTD.)
Antioxidant 1: ANTIGENE 6C (N-(1,3-dimethylbutyl)-N'-phenyl-p-phenylenediamine (6PPD), available from Sumitomo Chemical Company, Limited)
Antioxidant 2: ANTAGE RD (2,2,4-trimethyl-1,2-dihydroquinoline polymer (TMDQ), available from Kawaguchi Chemical Industry Co., Ltd.)
Stearic acid: Stearic Acid "CAMELLIA" (available from NOF Corporation)
Zinc oxide: Zinc Oxide Type-2 (available from Mitsui Mining & Smelting Co., Ltd.)
Sulfur: HK200-5 (powdery sulfur containing 5% of oil, available from Hosoi Chemical Industry Co., Ltd.)
Vulcanization accelerator 1: SANCELER NS-G (N-(tert-butyl)-2-benzothiazole sulfenamide (TBBS), available from SANSHIN CHEMICAL INDUSTRY CO., LTD.)
Vulcanization accelerator 2: NOCCELER D (1,3-diphenylguanidine (DPG), available from Ouchi Shinko Chemical Industrial Co., Ltd.)

Examples and Comparative Examples

<Production of Rubber Composition and Tire>

In accordance with each of blending formulas shown in Tables 1 and 2, the chemicals other than the sulfur and the vulcanization accelerator were kneaded for 5 minutes by using a 1.7-L sealed Banbury mixer until reaching a discharge temperature of 170°C, to obtain a kneaded product. Furthermore, the obtained kneaded product was re-kneaded (remilled) at a discharge temperature of 150°C for 4 minutes by using the Banbury mixer. Next, the sulfur and the vulcanization accelerator were added to the obtained kneaded product, and the mixture was kneaded for 4 minutes by using a twin-screw open roll until reaching 105°C, to obtain an unvulcanized rubber composition.
The obtained unvulcanized rubber composition was press-vulcanized under a condition of 170°C for 12 minutes to produce a vulcanized rubber composition.
The obtained unvulcanized rubber composition was extruded into the shape of a tire tread by using an extruder having a die with a predetermined shape, and was attached together with other tire members on a tire-shaping machine to form an unvulcanized tire, and the unvulcanized tire was press-vulcanized at 170°C for 15 minutes, whereby test tires (size: 175/60R18) were produced.

<Evaluation>

The obtained unvulcanized rubber compositions, vulcanized rubber compositions, and test tires were evaluated as described below. The results are shown in Tables 1 and 2.

(Processability)

For the obtained unvulcanized rubber compositions, a Mooney viscosity ($ML_{1+4}$) was measured under a temperature condition of 130°C according to a Mooney viscosity measurement method that complies with JIS K 6300-1 "Rubber, unvulcanized-Physical property-Part 1: Determination of Mooney viscosity and pre-vulcanization characteristics with Mooney viscometer". The $ML_{1+4}$ for each blending formula is shown as a processability index by the following calculation equation with the $ML_{1+4}$ of Comparative Example 1 being regarded as 100. A higher processability index indicates that the Mooney viscosity is lower and that the processability is better.

(Processability index) = ($ML_{1+4}$ of Comparative Example 1) / ($ML_{1+4}$ for each blending formula) $\times$ 100

(Low Fuel Consumption Performance)

For the test tires, a rolling resistance coefficient was measured such that a maximum load capacity was set to 615 kg and the other conditions were conditions that comply with JIS D 4234:2009. The rolling resistance coefficient for each blending formula is shown as a low fuel consumption performance index by the following calculation equation with the rolling resistance coefficient of Comparative Example 1 being regarded as 100. A higher low fuel consumption performance index indicates that the rolling resistance is lower and that the low fuel consumption performance is better.

(Low fuel consumption performance index) = (rolling resistance coefficient of Comparative Example 1) / (rolling resistance coefficient for each blending formula) $\times$ 100

(Wet Grip Performance)

The wet grip performance was evaluated on the basis of the braking performance determined by an anti-lock brake system (ABS) evaluation test. Specifically, the test tires were mounted to a 1800-cc class passenger car equipped with an ABS, and the car was caused to run on an asphalt road surface (a wet road surface condition, skid number: approximately 50). Then, the brake was applied when the speed was 100 km/h, and the deceleration until the passenger car stopped was calculated. The deceleration is a distance for which the passenger car runs until the passenger car stops. The deceleration for each blending formula is shown as a wet grip performance index by the following calculation equation with the deceleration of Comparative Example 1 being regarded as 100. A higher wet grip performance index indicates that the braking performance is better and that the wet grip performance is better.

(Wet grip performance index) = (deceleration of Comparative Example 1) / (deceleration for each blending formula) $\times$ 100

(Fracture Properties)

According to JIS K 6251: 2010, "Rubber, vulcanized or thermoplastics-Determination of tensile stress-strain properties", a tensile test was carried out at 25°C using a No. 6 dumbbell type test piece formed from each vulcanized rubber composition, to measure breaking strength TB (MPa) and elongation at break EB (%). Then, the value of TB $\times$ EB $\div$ 2 (MPa%) was calculated. The value of TB $\times$ EB $\div$ 2 (MPa%) for each blending formula is shown as a fracture properties index by the following calculation equation with the value of TB $\times$ EB $\div$ 2 (MPa%) of Comparative Example 1 being regarded as 100. A higher fracture properties index indicates that the fracture properties are better.

(Fracture properties index) = (value for each blending formula) / (value of Comparative Example 1) $\times$ 100

(Combined Performance)

The sum of the values of the low fuel consumption performance index, the wet grip performance index, the fracture properties index, and the processability index is shown as "combined performance". A higher value of combined performance indicates that the combined performance of low fuel consumption performance, wet grip performance, fracture properties, and processability is better.

[Table 1]

Table 1

| | | Comparative Example | | | | | | | |
|---|---|---|---|---|---|---|---|---|---|
| | | 1 | 2 | 3 | 4 | 5 | 6 | 7 | 8 |
| Blending amount (parts by mass) | NR | 30 | 30 | 30 | 30 | 30 | 30 | 30 | 70 |
| | SBR | 40 | 40 | 40 | 40 | 40 | 40 | 40 | - |
| | BR | 30 | 30 | 30 | 30 | 30 | 30 | 30 | 30 |
| | Carbon black | 30 | 30 | 30 | 30 | 30 | 10 | 70 | 30 |
| | Silica | 50 | 50 | 50 | 50 | 50 | 70 | 10 | 50 |
| | Silane coupling agent 1 | - | - | - | 4 | 4 | 5.6 | - | - |
| | Silane coupling agent 2 | 4 | 4 | 4 | - | - | - | 0.8 | 4 |
| | Silane coupling agent 3 | - | - | - | - | - | - | - | - |
| | Resin | - | 4 | - | 4 | - | - | 4 | 4 |
| | Oil | - | 15 | 15 | - | 15 | 15 | 5 | 5 |
| | Liquid rubber 1 | 15 | - | - | 15 | - | - | 10 | 10 |
| | Liquid rubber 2 | - | - | - | - | - | - | - | - |
| | Wax | 1.5 | 1.5 | 1.5 | 1.5 | 1.5 | 1.5 | 1.5 | 1.5 |
| | Antioxidant 1 | 2 | 2 | 2 | 2 | 2 | 2 | 2 | 2 |
| | Antioxidant 2 | 1 | 1 | 1 | 1 | 1 | 1 | 1 | 1 |
| | Stearic acid | 2 | 2 | 2 | 2 | 2 | 2 | 2 | 2 |
| | Zinc oxide | 2 | 2 | 2 | 2 | 2 | 2 | 2 | 2 |
| | Sulfur | 1.7 | 1.7 | 1.7 | 1.7 | 1.7 | 1.7 | 1.7 | 1.7 |
| | Vulcanization accelerator 1 | 2 | 2 | 2 | 2 | 2 | 2 | 2 | 2 |
| | Vulcanization accelerator 2 | 2 | 2 | 2 | 2 | 2 | 2 | 2 | 2 |
| Amount of silica in filler (% by mass) | | 62.5 | 62.5 | 62.5 | 62.5 | 62.5 | 87.5 | 12.5 | 62.5 |
| Amount of carbon black in filler (% by mass) | | 37.5 | 37.5 | 37.5 | 37.5 | 37.5 | 12.5 | 87.5 | 37.5 |
| (Amount of isoprene-based rubber) / (amount of silica) | | 0.60 | 0.60 | 0.60 | 0.60 | 0.60 | 0.43 | 3.00 | 1.40 |
| (Amount of liquid rubber) / (amount of silica) | | 0.30 | 0 | 0 | 0.30 | 0 | 0 | 1.00 | 0.20 |
| (Amount of isoprene-based rubber) / (amount of resin) | | 0 | 7.50 | 0 | 7.50 | 0 | 0 | 7.50 | 17.50 |
| (Amount of liquid rubber) + (amount of resin) | | 15 | 4 | 0 | 19 | 0 | 0 | 14 | 14 |
| Evaluation | Processability | 100 | 98 | 99 | 98 | 101 | 100 | 97 | 91 |
| | Low fuel consumption performance | 100 | 97 | 99 | 86 | 80 | 94 | 91 | 87 |
| | Wet grip performance | 100 | 101 | 94 | 99 | 83 | 93 | 79 | 74 |
| | Fracture properties | 100 | 99 | 102 | 96 | 100 | 93 | 106 | 110 |
| | Combined performance | 400 | 395 | 394 | 379 | 364 | 380 | 373 | 362 |

[Table 2]

Table 2

| | | Example | | | | | | |
|---|---|---|---|---|---|---|---|---|
| | | 1 | 2 | 3 | 4 | 5 | 6 | 7 |
| Blending amount (parts by mass) | NR | 30 | 30 | 10 | 20 | 30 | 30 | 40 |
| | SBR | 40 | 40 | 60 | 40 | 40 | 40 | 30 |
| | BR | 30 | 30 | 30 | 40 | 30 | 30 | 30 |
| | Carbon black | 30 | 30 | 40 | 60 | 30 | 30 | 30 |
| | Silica | 50 | 50 | 40 | 20 | 50 | 50 | 50 |
| | Silane coupling agent 1 | - | - | - | - | - | - | - |
| | Silane coupling agent 2 | 4 | 4 | 3.2 | 1.6 | - | 4 | 4 |
| | Silane coupling agent 3 | - | - | - | - | 4 | - | - |
| | Resin | 4 | 4 | 4 | 15 | 4 | 4 | 4 |
| | Oil | 5 | - | 5 | - | - | - | - |
| | Liquid rubber 1 | 10 | 15 | 10 | 10 | 15 | - | 15 |
| | Liquid rubber 2 | - | - | - | - | - | 15 | - |
| | Wax | 1.5 | 1.5 | 1.5 | 1.5 | 1.5 | 1.5 | 1.5 |
| | Antioxidant 1 | 2 | 2 | 2 | 2 | 2 | 2 | 2 |
| | Antioxidant 2 | 1 | 1 | 1 | 1 | 1 | 1 | 1 |
| | Stearic acid | 2 | 2 | 2 | 2 | 2 | 2 | 2 |
| | Zinc oxide | 2 | 2 | 2 | 2 | 2 | 2 | 2 |
| | Sulfur | 1.7 | 1.7 | 1.7 | 1.7 | 1.7 | 1.7 | 1.7 |
| | Vulcanization accelerator 1 | 2 | 2 | 2 | 2 | 2 | 2 | 2 |
| | Vulcanization accelerator 2 | 2 | 2 | 2 | 2 | 2 | 2 | 2 |
| Amount of silica in filler (% by mass) | | 62.5 | 62.5 | 50.0 | 25.0 | 62.5 | 62.5 | 62.5 |
| Amount of carbon black in filler (% by mass) | | 37.5 | 37.5 | 50.0 | 75.0 | 37.5 | 37.5 | 37.5 |
| (Amount of isoprene-based rubber) / (amount of silica) | | 0.60 | 0.60 | 0.25 | 1.00 | 0.60 | 0.60 | 0.80 |
| (Amount of liquid rubber) / (amount of silica) | | 0.20 | 0.30 | 0.25 | 0.50 | 0.30 | 0.30 | 0.30 |
| (Amount of isoprene-based rubber) / (amount of resin) | | 7.50 | 7.50 | 2.50 | 1.33 | 7.50 | 7.50 | 10.00 |
| (Amount of liquid rubber) + (amount of resin) | | 14 | 19 | 14 | 25 | 19 | 19 | 19 |
| Evaluation | Processability | 108 | 110 | 108 | 113 | 111 | 109 | 104 |
| | Low fuel consumption performance | 105 | 106 | 103 | 108 | 103 | 104 | 103 |
| | Wet grip performance | 108 | 110 | 122 | 98 | 108 | 105 | 100 |
| | Fracture properties | 101 | 100 | 102 | 119 | 108 | 104 | 111 |
| | Combined performance | 422 | 426 | 435 | 438 | 430 | 422 | 418 |

From the results of Tables 1 and 2, it is found that the rubber composition and the tire of each Example have improved low fuel consumption performance, wet grip performance, fracture properties, and processability in a well-balanced manner as a whole as compared to those of each Comparative Example.

## Claims

**1.** A tire tread rubber composition containing:

a rubber component including an isoprene-based rubber and a styrene-butadiene rubber;
a filler including 20% by mass or more of silica and 20% by mass or more of carbon black;
a mercapto-based silane coupling agent;
a liquid rubber; and

a resin,
wherein the mercapto-based silane coupling agent means a silane coupling agent having a mercapto group and a silane coupling agent having a structure in which a mercapto group is protected by a protecting group.

**2.** The tire tread rubber composition according to claim 1, wherein an amount (% by mass) of the isoprene-based rubber in the rubber component and an amount (parts by mass) of the silica per 100 parts by mass of the rubber component satisfy the following formula (A),

$$\text{(amount of isoprene-based rubber) / (amount of silica)} \leq 2.0 \qquad \text{(A)}.$$

**3.** The tire tread rubber composition according to claim 1 or 2, wherein the liquid rubber is a liquid styrene-butadiene rubber.

**4.** The tire tread rubber composition according to any one of claims 1 to 3, wherein the resin is an aromatic resin.

**5.** The tire tread rubber composition according to any one of claims 1 to 4, wherein an amount (parts by mass) of the liquid rubber and the amount (parts by mass) of the silica per 100 parts by mass of the rubber component satisfy the following formula (B),

$$\text{(amount of liquid rubber) / (amount of silica)} \geq 0.1 \qquad \text{(B)}.$$

**6.** The tire tread rubber composition according to any one of claims 1 to 5, wherein the amount (% by mass) of the isoprene-based rubber in the rubber component and an amount (parts by mass) of the resin per 100 parts by mass of the rubber component satisfy the following formula (C),

$$\text{(amount of isoprene-based rubber) / (amount of resin)} \leq 13.0 \qquad \text{(C)}.$$

**7.** The tire tread rubber composition according to any one of claims 1 to 6, wherein the amount (parts by mass) of the liquid rubber and the amount (parts by mass) of the resin per 100 parts by mass of the rubber component satisfy the following formula (D),

$$\text{(amount of liquid rubber) + (amount of resin)} \geq 11 \qquad \text{(D)}.$$

**8.** The tire tread rubber composition according to any one of claims 1 to 7, wherein the amount of the isoprene-based rubber in the rubber component is less than 50% by mass.

**9.** The tire tread rubber composition according to any one of claims 1 to 8, wherein the mercapto-based silane coupling agent is at least one compound selected from the group consisting of a compound represented by the following formula (S 1), a compound represented by the following formula (1), and a compound containing a linking unit A represented by the following formula (2) and a linking unit B represented by the following formula (3),

[Chem. 1]

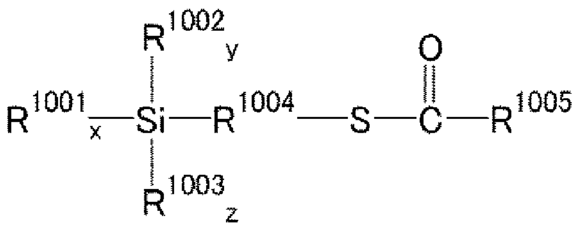

(S1)

wherein $R^{1001}$ represents a monovalent group selected from -Cl, -Br, $-OR^{1006}$, $-O(O=)CR^{1006}$, $-ON=CR^{1006}R^{1007}$, $-NR^{1006}R^{1007}$, and $-(OSiR^{1006}R^{1007})_h(OSiR^{1006}R^{1007}R^{1008})$ (wherein $R^{1006}$, $R^{1007}$, and $R^{1008}$ may be the same or

may be different from each other and each represent a hydrogen atom or a monovalent hydrocarbon group having 1 to 18 carbon atoms, and an average of "h" is 1 to 4), $R^{1002}$ represents $R^{1001}$, a hydrogen atom, or a monovalent hydrocarbon group having 1 to 18 carbon atoms, $R^{1003}$ represents a $-[O(R^{1009}O)_j]-$ group ($R^{1009}$ is an alkylene group having 1 to 18 carbon atoms, and "j" is an integer from 1 to 4), $R^{1004}$ represents a divalent hydrocarbon group having 1 to 18 carbon atoms, $R^{1005}$ represents a monovalent hydrocarbon group having 1 to 18 carbon atoms, and "x", "y", and "z" are numerals that satisfy the relationships of $x + y + 2z = 3$, $0 \leq x \leq 3$, $0 \leq y \leq 2$, and $0 \leq z \leq 1$,

[Chem. 2]

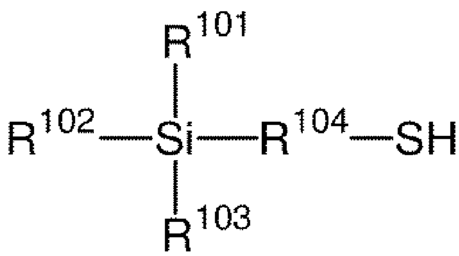

(1)

wherein $R^{101}$ to $R^{103}$ each represent a linear or branched alkyl group having 1 to 12 carbon atoms, a linear or branched alkoxy group having 1 to 12 carbon atoms, or a group represented by $-O-(R^{111}-O)_z-R^{112}$ (z $R^{111}$s each represent a linear or branched divalent hydrocarbon group having 1 to 30 carbon atoms, and may be the same or different from each other. $R^{112}$ represents a linear or branched alkyl group having 1 to 30 carbon atoms, a linear or branched alkenyl group having 2 to 30 carbon atoms, an aryl group having 6 to 30 carbon atoms, or an aralkyl group having 7 to 30 carbon atoms. z represents an integer from 1 to 30.), $R^{101}$ to $R^{103}$ may be the same or different from each other, and $R^{104}$ represents a linear or branched alkylene group having 1 to 6 carbon atoms,

[Chem. 3]

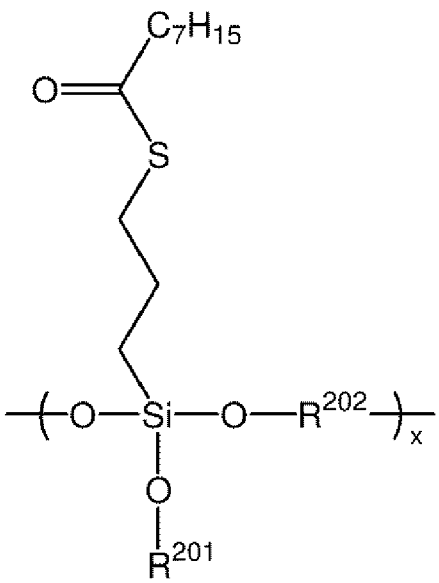

(2)

[Chem. 4]

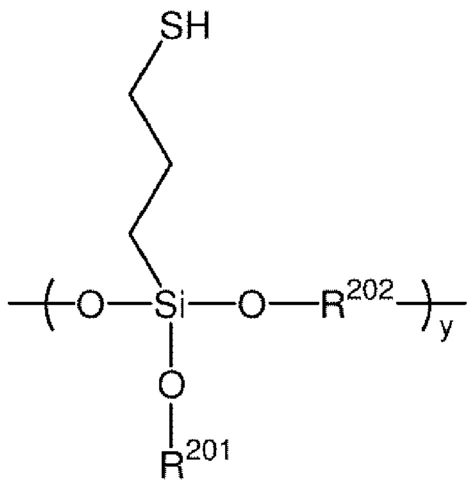

(3)

wherein x is an integer equal to or greater than 0, y is an integer equal to or greater than 1, each $R^{201}$ represents a hydrogen atom, a halogen atom, a linear or branched alkyl group having 1 to 30 carbon atoms, a linear or branched alkenyl group having 2 to 30 carbon atoms, a linear or branched alkynyl group having 2 to 30 carbon atoms, or a group obtained by substituting a hydrogen atom at the end of the alkyl group with a hydroxyl group or a carboxyl group, each $R^{202}$ represents a linear or branched alkylene group having 1 to 30 carbon atoms, a linear or branched alkenylene group having 2 to 30 carbon atoms, or a linear or branched alkynylene group having 2 to 30 carbon atoms, and $R^{201}$ and $R^{202}$ may form a ring structure.

**10.** A tire tread formed from the tire tread rubber composition according to any one of claims 1 to 9.

**11.** A tire for a passenger car, comprising the tire tread according to claim 10.

**12.** The tire for a passenger car according to claim 11, wherein a relationship between a tire outer diameter Dt (mm) and a tire cross-section width Wt (mm) satisfies the following formula (α),

$$1963.4 \leq (Dt \wedge 2 \times \pi/4) / Wt \leq 2827.4 \qquad (\alpha).$$

**Patentansprüche**

**1.** Reifenlaufstreifen-Kautschukzusammensetzung, welche enthält:

eine Kautschukkomponente, die einen Isopren-basierten Kautschuk und einen Styrol-Butadien-Kautschuk umfasst;
einen Füllstoff, der 20 Massenprozent oder mehr an Siliciumdioxid und 20 Massenprozent oder mehr an Ruß umfasst;
ein mercapto-basiertes Silan-Kopplungsmittel;
einen flüssigen Kautschuk; und
ein Harz,
wobei das mercapto-basierte Silan-Kopplungsmittel ein Silan-Kopplungsmittel, das eine Mercaptogruppe aufweist, und ein Silan-Kopplungsmittel, das eine Struktur aufweist, in der eine Mercaptogruppe durch eine Schutzgruppe geschützt ist, bedeutet.

**2.** Reifenlaufstreifen-Kautschukzusammensetzung nach Anspruch 1, wobei eine Menge (Massenprozent) des Isopren-basierten Kautschuks in der Kautschukkomponente und eine Menge (Massenteile) des Siliciumdioxids pro 100 Massenteile der Kautschukkomponente der folgenden Formel (A) genügen,

(Menge an Isopren-basiertem Kautschuk) / (Menge an Siliciumdioxid) ≤ 2,0

3. Reifenlaufstreifen-Kautschukzusammensetzung nach Anspruch 1 oder 2, wobei der flüssige Kautschuk ein flüssiger Styrol-Butadien-Kautschuk ist.

4. Reifenlaufstreifen-Kautschukzusammensetzung nach einem der Ansprüche 1 bis 3, wobei das Harz ein aromatisches Harz ist.

5. Reifenlaufstreifen-Kautschukzusammensetzung nach einem der Ansprüche 1 bis 4, wobei eine Menge (Massenteile) des flüssigen Kautschuks und die Menge (Massenteile) des Siliciumdioxids pro 100 Massenteile der Kautschukkomponente der folgenden Formel (B) genügen,

$$\text{(Menge an flüssigem Kautschuk) / (Menge an Siliciumdioxid)} \geq 0{,}1 \quad \text{(B).}$$

6. Reifenlaufstreifen-Kautschukzusammensetzung nach einem der Ansprüche 1 bis 5, wobei die Menge (Massenprozent) des Isopren-basierten Kautschuks in der Kautschukkomponente und eine Menge (Massenteile) des Harzes pro 100 Massenteile der Kautschukkomponente der folgenden Formel (C) genügen,

$$\text{(Menge an Isopren-basiertem Kautschuk) / (Menge an Harz)} \leq 13{,}0 \quad \text{(C).}$$

7. Reifenlaufstreifen-Kautschukzusammensetzung nach einem der Ansprüche 1 bis 6, wobei die Menge (Massenteile) des flüssigen Kautschuks und die Menge (Massenteile) des Harzes pro 100 Massenteile der Kautschukkomponente der folgenden Formel (D) genügen,

$$\text{(Menge an flüssigem Kautschuk) + (Menge an Harz)} \geq 11 \quad \text{(D).}$$

8. Reifenlaufstreifen-Kautschukzusammensetzung nach einem der Ansprüche 1 bis 7, wobei die Menge des Isopren-basierten Kautschuks in der Kautschukkomponente weniger als 50 Massenprozent beträgt.

9. Reifenlaufstreifen-Kautschukzusammensetzung nach einem der Ansprüche 1 bis 8, wobei das mercapto-basierte Silan-Kopplungsmittel mindestens eine Verbindung ist, welche ausgewählt ist aus der Gruppe bestehend aus einer durch die folgende Formel (S1) dargestellten Verbindung, einer durch die folgende Formel (1) dargestellten Verbindung, und einer Verbindung, die eine durch die folgende Formel (2) dargestellte Verknüpfungseinheit A und eine durch die folgende Formel (3) dargestellte Verknüpfungseinheit B enthält,

[Chem. 1]

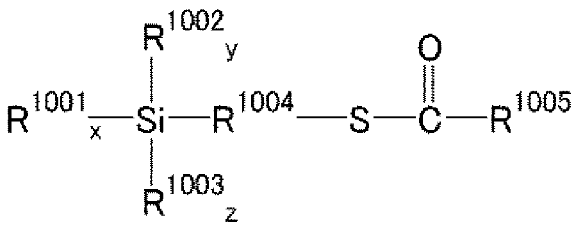

(S1)

wobei $R^{1001}$ eine einwertige Gruppe darstellt, welche aus -Cl, -Br, $-OR^{1006}$, $-O(O=)CR^{1006}$, $-ON=CR^{1006}R^{1007}$, $-NR^{1006}R^{1007}$ und $-(OSiR^{1006}R^{1007})_h(OSiR^{1006}R^{1007}R^{1008})$ ausgewählt ist (wobei $R^{1006}$, $R^{1007}$ und $R^{1008}$ gleich oder voneinander verschieden sein können und jeweils ein Wasserstoffatom oder eine einwertige Kohlenwasserstoffgruppe mit 1 bis 18 Kohlenstoffatomen darstellen, und ein Mittelwert von "h" 1 bis 4 beträgt), $R^{1002}$ $R^{1001}$, ein Wasserstoffatom oder eine einwertige Kohlenwasserstoffgruppe mit 1 bis 18 Kohlenstoffatomen darstellt, $R^{1003}$ eine $-[O(R^{1009}O)_j]$-Gruppe darstellt ($R^{1009}$ ist eine Alkylengruppe mit 1 bis 18 Kohlenstoffatomen, und "j" ist eine ganze Zahl von 1 bis 4), $R^{1004}$ eine zweiwertige Kohlenwasserstoffgruppe mit 1 bis 18 Kohlenstoffatomen darstellt, $R^{1005}$ eine einwertige Kohlenwasserstoffgruppe mit 1 bis 18 Kohlenstoffatomen darstellt, und "x", "y" und "z" Zahlen sind, die den Verhältnissen $x + y + 2z = 3$, $0 \leq x \leq 3$, $0 \leq y \leq 2$ und $0 \leq z \leq 1$ genügen,

[Chem. 2]

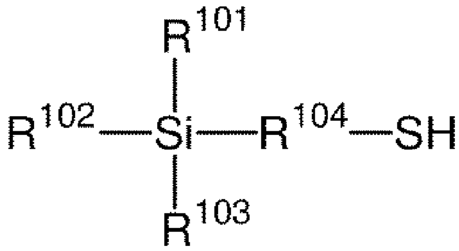

(1)

wobei $R^{101}$ bis $R^{103}$ jeweils eine lineare oder verzweigte Alkylgruppe mit 1 bis 12 Kohlenstoffatomen, eine lineare oder verzweigte Alkoxygruppe mit 1 bis 12 Kohlenstoffatomen oder eine durch $-O-(R^{111}-O)_z-R^{112}$ dargestellte Gruppe darstellen (z $R^{111}$'s stellen jeweils eine lineare oder verzweigte, zweiwertige Kohlenwasserstoffgruppe mit 1 bis 30 Kohlenstoffatomen dar, und können gleich oder voneinander verschieden sein. $R^{112}$ stellt eine lineare oder verzweigte Alkylgruppe mit 1 bis 30 Kohlenstoffatomen, eine lineare oder verzweigte Alkenylgruppe mit 2 bis 30 Kohlenstoffatomen, eine Arylgruppe mit 6 bis 30 Kohlenstoffatomen oder eine Aralkylgruppe mit 7 bis 30 Kohlenstoffatomen dar. z stellt eine ganze Zahl von 1 bis 30 dar.), $R^{101}$ bis $R^{103}$ gleich oder voneinander verschieden sein können, und $R^{104}$ eine lineare oder verzweigte Alkylengruppe mit 1 bis 6 Kohlenstoffatomen darstellt,

[Chem. 3]

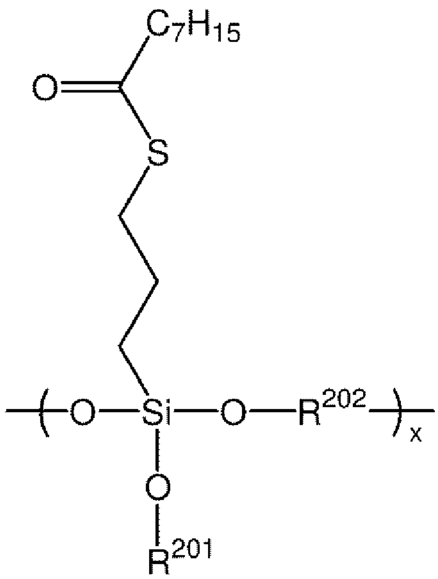

(2)

[Chem. 4]

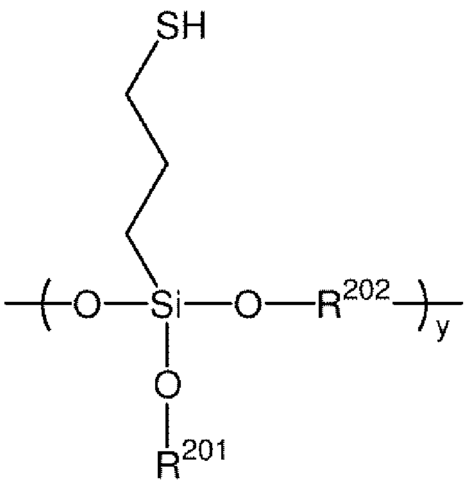

(3)

wobei x eine ganze Zahl ist, die gleich oder größer als 0 ist, y eine ganze Zahl ist, die gleich oder größer als 1 ist, jedes $R^{201}$ ein Wasserstoffatom, ein Halogenatom, eine lineare oder verzweigte Alkylgruppe mit 1 bis 30 Kohlenstoffatomen, eine lineare oder verzweigte Alkenylgruppe mit 2 bis 30 Kohlenstoffatomen, eine lineare oder verzweigte Alkinylgruppe mit 2 bis 30 Kohlenstoffatomen oder eine durch Substituieren eines Wasserstoffatoms am Ende der Alkylgruppe mit einer Hydroxylgruppe oder einer Carboxylgruppe erhaltene Gruppe darstellt, jedes $R^{202}$ eine lineare oder verzweigte Alkylengruppe mit 1 bis 30 Kohlenstoffatomen, eine lineare oder verzweigte Alkenylengruppe mit 2 bis 30 Kohlenstoffatomen oder eine lineare oder verzweigte Alkinylengruppe mit 2 bis 30 Kohlenstoffatomen darstellt, und $R^{201}$ und $R^{202}$ eine Ringstruktur bilden können.

**10.** Reifenlaufstreifen, gebildet mit der Reifenlaufstreifen-Kautschukzusammensetzung nach einem der Ansprüche 1 bis 9.

**11.** Reifen für einen Personenkraftwagen, umfassend den Reifenlaufstreifen nach Anspruch 10.

**12.** Reifen für einen Personenkraftwagen nach Anspruch 11, wobei ein Verhältnis zwischen einem Reifenaußendurchmesser Dt (mm) und einer Reifenquerschnittsbreite Wt (mm) der folgenden Formel ($\alpha$) genügt,

$$1963,4 \leq (Dt \wedge 2 \times \pi/4) / Wt \leq 2827,4 \quad (\alpha).$$

**Revendications**

**1.** Composition de caoutchouc pour bande de roulement de pneu contenant :

un composant caoutchouc comportant un caoutchouc à base d'isoprène et un caoutchouc styrène-butadiène ;
une charge comportant 20 % en masse ou plus de silice et 20 % en masse ou plus de noir de carbone ;
un agent de couplage silane à base mercapto ;
un caoutchouc liquide ; et
une résine,
dans laquelle l'agent de couplage silane à base mercapto se rapporte à un agent de couplage silane ayant un groupement mercapto et un agent de couplage silane ayant une structure dans laquelle un groupement mercapto est protégé par un groupement protecteur.

**2.** Composition de caoutchouc pour bande de roulement de pneu selon la revendication 1, dans laquelle une quantité (% en masse) de caoutchouc à base d'isoprène dans le composant caoutchouc et une quantité (parties en masse) de silice, pour 100 parties en masse de composant caoutchouc, satisfont à la formule suivante (A),

$$(\text{quantité de caoutchouc à base d'isoprène}) / (\text{quantité de silice}) \leq 2,0 \quad (A).$$

3. Composition de caoutchouc pour bande de roulement de pneu selon la revendication 1 ou la revendication 2, dans laquelle le caoutchouc liquide est un caoutchouc styrène-butadiène liquide.

4. Composition de caoutchouc pour bande de roulement de pneu selon l'une quelconque des revendications 1 à 3, dans laquelle la résine est une résine aromatique.

5. Composition de caoutchouc pour bande de roulement de pneu selon l'une quelconque des revendications 1 à 4, dans laquelle une quantité (parties en masse) de caoutchouc liquide et la quantité (parties en masse) de silice, pour 100 parties en masse de composant caoutchouc, satisfont à la formule suivante (B),

$$\text{(quantité de caoutchouc liquide) / (quantité de silice)} \geq 0{,}1 \qquad \text{(B).}$$

6. Composition de caoutchouc pour bande de roulement de pneu selon l'une quelconque des revendications 1 à 5, dans laquelle la quantité (% en masse) de caoutchouc à base d'isoprène dans le composant caoutchouc et une quantité (parties en masse) de résine, pour 100 parties en masse de composant caoutchouc, satisfont à la formule suivante (C),

$$\text{(quantité de caoutchouc à base d'isoprène) / (quantité de résine)} \leq 13{,}0\text{(C).}$$

7. Composition de caoutchouc pour bande de roulement de pneu selon l'une quelconque des revendications 1 à 6, dans laquelle la quantité (parties en masse) de caoutchouc liquide et la quantité (parties en masse) de résine, pour 100 parties en masse de composant caoutchouc, satisfont à la formule suivante (D),

$$\text{(quantité de caoutchouc liquide) + (quantité de résine)} \geq 11 \qquad \text{(D).}$$

8. Composition de caoutchouc pour bande de roulement de pneu selon l'une quelconque des revendications 1 à 7, dans laquelle la quantité de caoutchouc à base d'isoprène dans le composant caoutchouc est inférieure à 50 % en masse.

9. Composition de caoutchouc pour bande de roulement de pneu selon l'une quelconque des revendications 1 à 8, dans laquelle l'agent de couplage silane à base mercapto est au moins un composé choisi dans le groupe constitué d'un composé représenté par la formule suivante (S1), un composé représenté par la formule suivante (1), et un composé contenant une unité de liaison A représentée par la formule suivante (2) et une unité de liaison B représentée par la formule suivante (3),

[Formule chimique 1]

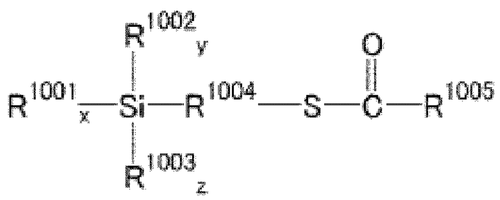

(S1)

où $R^{1001}$ représente un groupement monovalent choisi parmi -Cl, -Br, $-OR^{1006}$, $-O(O=)CR^{1006}$, $-ON=CR^{1006}R^{1007}$, $-NR^{1006}R^{1007}$, et $-(OSiR^{1006}R^{1007})_h(OSiR^{1006}R^{1007}R^{1008})$, (où $R^{1006}$, $R^{1007}$ et $R^{1008}$ peuvent être identiques ou peuvent être différents les uns des autres et chacun représente un atome d'hydrogène ou un groupement hydrocarboné monovalent ayant 1 à 18 atomes de carbone, et une valeur moyenne de « h » est de 1 à 4), $R^{1002}$ représente $R^{1001}$, un atome d'hydrogène, ou un groupement hydrocarboné monovalent ayant 1 à 18 atomes de carbone, $R^{1003}$ représente un groupement $-[O(R^{1009}O)_j]$ ($R^{1009}$ est un groupement alcylène ayant 1 à 18 atomes de carbone, et « j » est un nombre entier de 1 à 4), $R^{1004}$ représente un groupement hydrocarboné divalent ayant 1 à 18 atomes de carbone, $R^{1005}$ représente un groupement hydrocarboné monovalent ayant 1 à 18 atomes de carbone, et « x », « y » et « z » sont des valeurs numériques qui satisfont aux relations $x + y + 2z = 3$, $0 \leq x \leq 3$, $0 \leq y \leq 2$, et $0 \leq z \leq 1$,

[Formule chimique 2]

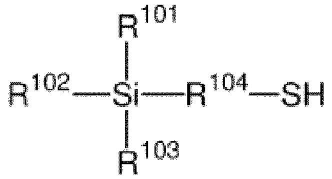

(1)

où $R^{101}$ à $R^{103}$ représentent chacun un groupement alkyle linéaire ou ramifié ayant 1 à 12 atomes de carbone, un groupement alcoxy linéaire ou ramifié ayant 1 à 12 atomes de carbone, ou un groupement représenté par $-O-(R^{111}-O)_z-R^{112}$ (z $R^{111}$ représentent chacun un groupement hydrocarboné divalent linéaire ou ramifié ayant 1 à 30 atomes de carbone, et peuvent être identiques ou différents les uns des autres. $R^{112}$ représente un groupement alkyle linéaire ou ramifié ayant 1 à 30 atomes de carbone, un groupement alcényle linéaire ou ramifié ayant 2 à 30 atomes de carbone, un groupement aryle ayant 6 à 30 atomes de carbone, ou un groupement aralkyle ayant 7 à 30 atomes de carbone, z représente un nombre entier de 1 à 30), $R^{101}$ à $R^{103}$ peuvent être identiques ou différents les uns des autres, et $R^{104}$ représente un groupement alcylène linéaire ou ramifié ayant 1 à 6 atomes de carbone,

[Formule chimique 3]

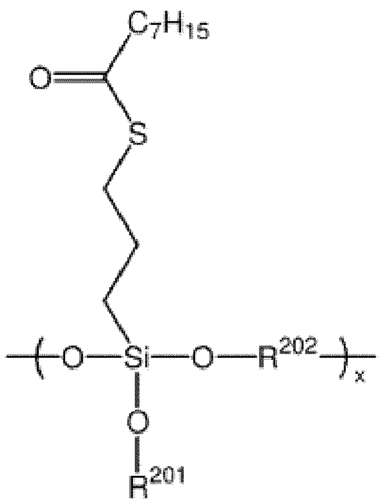

(2)

[Formule chimique 4]

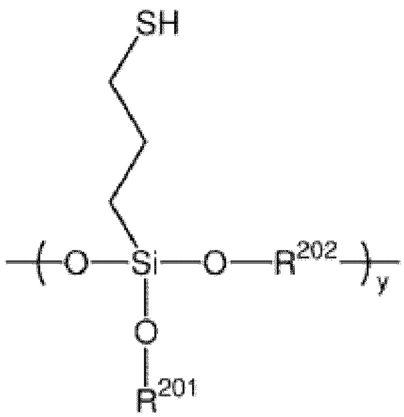

(3)

où x est un nombre entier égal ou supérieur à 0, y est un nombre entier égal ou supérieur à 1, chaque $R^{201}$ représente un atome d'hydrogène, un atome d'halogène, un groupement alkyle linéaire ou ramifié ayant 1 à 30 atomes de

carbone, un groupement alcényle linéaire ou ramifié ayant 2 à 30 atomes de carbone, un groupement alcynyle linéaire ou ramifié ayant 2 à 30 atomes de carbone, ou un groupement obtenu par la substitution d'un atome d'hydrogène à l'extrémité du groupement alkyle avec un groupement hydroxyle ou un groupement carboxyle, chaque $R^{202}$ représente un groupement alcylène linéaire ou ramifié ayant 1 à 30 atomes de carbone, un groupement alcénylène linéaire ou ramifié ayant 2 à 30 atomes de carbone, ou un groupement alcynylène linéaire ou ramifié ayant 2 à 30 atomes de carbone, et $R^{201}$ et $R^{202}$ peuvent former une structure cyclique.

**10.** Bande de roulement de pneu formée à base de la composition de caoutchouc pour bande de roulement de pneu selon l'une quelconque des revendications 1 à 9.

**11.** Pneu destiné à une voiture pour passagers, comprenant la bande de roulement de pneu selon la revendication 10.

**12.** Pneu destiné à une voiture pour passagers selon la revendication 11, dans lequel une relation entre un diamètre extérieur de pneu Dt (mm) et une largeur de section transversale de pneu Wt (mm) satisfait à la formule suivante ($\alpha$),

$$1963{,}4 \leq (Dt\,{}^\wedge 2 \times \pi/4)\ /\ Wt \leq 2827{,}4 \qquad (\alpha).$$

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2011246561 A
- EP 3882045 A1
- EP 3882046 A1


### Non-patent literature cited in the description


- Table of Solubility Parameters. **K. L. HOY.** Solvent and Coatings Materials Research and Development Department. Union Carbites Corp, 1985